# EUROPEAN PATENT SPECIFICATION

(11) **EP 3 252 606 B1**
(45) Date of publication and mention of the grant of the patent: **15.08.2018**
(21) Application number: 16172317.6
(22) Date of filing: 31.05.2016
(51) Int. Cl.: G06F 11/16

(54) **METHODS FOR SYNCHRONISATION OF INDEPENDENT DATA HANDLING SYSTEM**
VERFAHREN ZUR SYNCHRONISIERUNG VON UNABHÄNGIGEM DATENHANDHABUNGSSYSTEM
PROCÉDÉS DE SYNCHRONISATION D'UN SYSTÈME DE MANIPULATION DE DONNÉES INDÉPENDANTES

(43) Date of publication of application: 06.12.2017
(73) Proprietor: IG Knowhow Limited, London EC4R 2YA (GB)
(72) Inventor: LEVINE, Boris, London, EC4R 2YA (GB); SIMMONDS, David John, London, EC4R 2YA (GB); CLOKE, Jamie Roland, London, EC4R 2YA (GB)
(74) Representative: Ahmad, Sheikh Shakeel

(56) References cited:
- WO-A2-01/80009
- GB-A- 2 122 393
- US-A1- 2002 077 782

## Description

### TECHNICAL FIELD

This invention is directed to systems and methods for synchronisation of independent data handling or processing arrangements or systems, in particular synchronising systems or arrangements which handle, process and/or store large amounts of data from data streams, and where the independent systems process near identical data.

### BACKGROUND

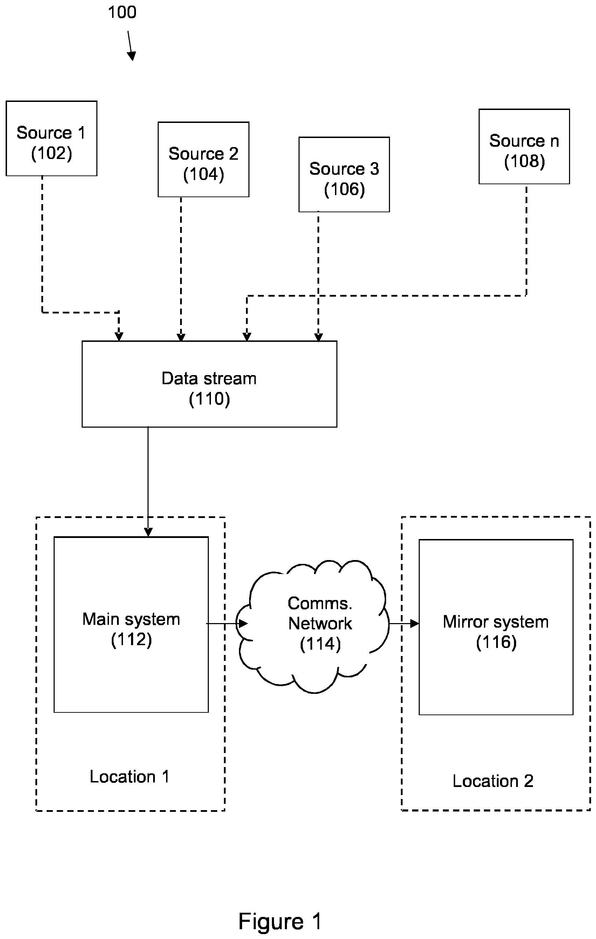

Generation, processing, transmission and receipt of data and information streams are well known. Various systems and processes use large data streams or data signals to transmit data over a data link, bus or other physical layer from one location to another. For example, telecommunications systems, broadcast media systems and networked computer systems use such techniques.
Redundancy and resiliency in these systems and processes is a previously considered problem. For example, parts of a data processing and management system may be duplicated. It is known that the content of a server can be mirrored, by copying its content to another server, typically in another physical location.
A basic mirroring system (100) is illustrated in **Figure 1****.** Data is provided by data sources; the drawing illustrates a number of sources 1-3 (102, 104, 106) to 'n' (108). The data from these data sources is collated, compiled, multiplexed or otherwise brought together to form a data stream (110). The data stream is then provided to the main system (112) in a first location (Location 1), for whichever later normal data use or processing operation is required. In order to provide redundancy for the main system (for example, a data server), the data stream or the data processed by the main system can be passed to a mirror system (116). The mirror system, for example a mirror server, is commonly in a different location (Location 2), so the transfer is made via a communications network (114). The mirror system can therefore host the same data (or processed data) as that existing on the main system. This provides the advantage that if the main system malfunctions, the other system can provide the required data content in its stead.

A disadvantage of such mirroring arrangements is that the content of the mirror system is inherently never precisely the same as that of the main system, due to the latency in the transfer from the main system to the mirror system via the communications network; the data on the mirror system is therefore a delayed or incomplete version of that on the main system. This type of arrangement also requires that the entire data set is transferred or copied from one system to another; for systems processing large amounts of data this requires large bandwidth on the channel transferring the data, and/or long periods for a given amount of data to be transferred. These disadvantages arise in part because the mirror system merely contains a copy of the main system's content, typically sent to the mirror system from the main system as illustrated here; there is no direct link between the sources 102-108 (or the data stream 110) and the mirror system.

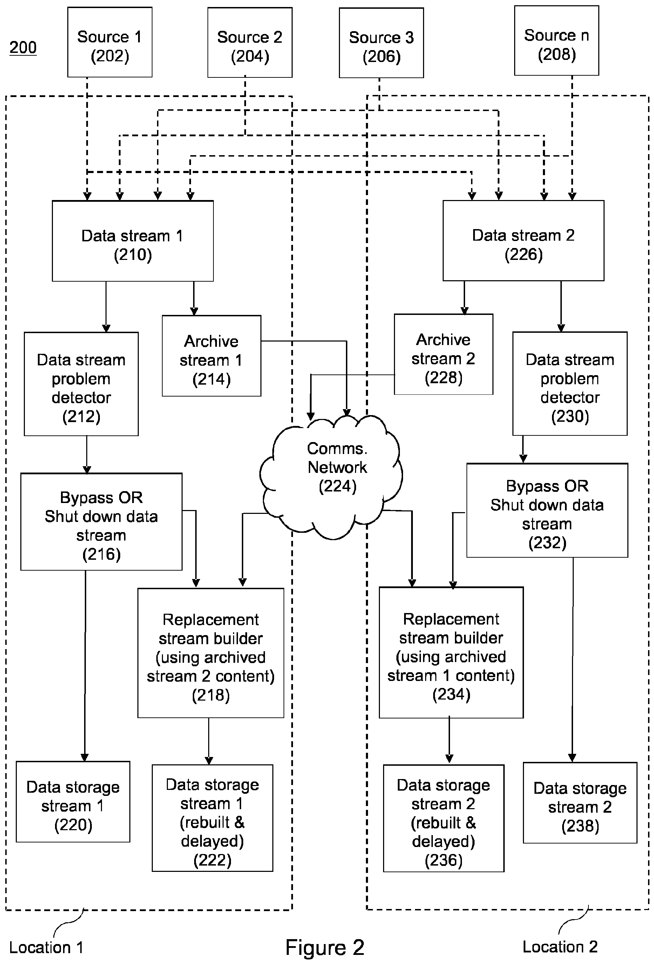

**Figure 2** illustrates another previously considered system (200), in which separate data streams 1 and 2 (210, 226) are compiled from feeds or links from the same data sources (202-208). Typically, the data from the data sources are processed to generate the data streams. The separate data streams are generated in the two separate locations, Location 1 and Location 2, and ultimately stored (220, 222, 236, 238) in those separate locations. Thus an attempt is made to provide the redundancy in the two separate locations at an earlier stage.

Since the data streams are now in the separate locations, it is now possible to determine at an early stage whether there are any problems with the data stream; for example, there may be a problem during generation of the stream, or there may be a delay in the feed from source 1 (202) to data stream 1 (210), which does not appear in the feed from source 1 to data stream 2 (226). This is in contrast to the system in **Figure 1****,** in which any problem with the data stream (110) will be inherent in the data in the main system or in the mirror system; the mirror system merely provides a backup in case the main system itself fails.

Each data stream is passed to a problem detector (212, 230), and to a storage system archiving the stream (214) for later use if necessary. If no problem with the stream is detected, the data simply bypasses the next block (216, 232) and is stored (220), for the later use or process for which the data from the data stream is required. However, if there is a problem with the data stream, then the processing system must be shut down, so that the problem can be remedied; continued production and storage of the stream is of little use if the stream is now problematic (for instance, wrongly assigned or delayed content, corrupted or incomplete data).

The data is therefore instead passed to a replacement stream builder (218). This takes the archived (214, 228) content from the other data stream, which has been transferred from the other Location via a communications network (224), and builds a corrected data stream, which can then be stored as an alternative or corrected version of the data stream (222). This version is of course necessarily delayed by having to halt the generation/processing of the data stream, await the transfer of the archived data from the other Location, and rebuild the data stream. Typically, the amount of data replaced is large, as the delay between the problem being detected, the stream being shut down, the archived content being received from the other location and the rebuilding of the stream up to current time (or as close as possible) can be significant. This system therefore again requires a large transfer of data over the communications network.

Another disadvantage of such a system is that it is highly complex, and therefore requires a large amount of infrastructure and/or computational processing capacity. A further disadvantage, compared for example to the mirror system, is that this system needs to determine whether or not there is a specific problem with the data stream, in order to provide the redundancy.

A further disadvantage is that there may be cases in which both data streams are partially invalid, for example where only a subset of one is invalid or inaccurate, but a different subset of the other is also invalid. This means that even if stream 1 is rebuilt with the stream 2, the resultant combination will necessarily also be partially invalid.

Furthermore, however accurate the rebuilding of the streams in this case or however well they are timed, and even if the streams experience no problems and are rarely rebuilt, this system nevertheless will have difficulty in synchronising the two (to four) stored data systems (220, 222 and 236, 238) with each other. That is, it will be difficult to maintain parity between the data sets in the different Locations, and ensure that they are accurate to the same most recent data. This will be especially apparent in situations in which the data feeds are high speed or high density, so that large numbers of data items are expected every second.

Since the streams are processed from input from the same sources, they will be largely highly similar, but usually not identical. It may for instance be that a difference between the two data streams may be undetectable by a data stream problem detector (212, 230); for example, it may be that the data received from the data sources for processing into the data streams are received in different orders, due to the separation of Locations 1 and 2. This means that there may not be a detectable problem per se in either stream, but nevertheless that the streams will differ, creating a potential synchronisation problem.

For instance, an event may be recorded or monitored by both data sources 1 and 2 (202, 204), with the first of the data sources to be received at a data stream being the one that is recorded in that stream. During monitoring, data source 1 changes its reporting of the event from a first data outcome or type to a second data outcome, and then to a third. In contrast, data source 2 changes immediately from the first outcome to the third outcome. If, at data stream 1, source 1's feed is received momentarily ahead of source 2, the data will be noted in data stream 1 changing from first outcome to second, and from second to third outcomes. However if, at data stream 2, source 2 is received first, it may be noted in data stream 2 that the data changed from first outcome to third, without ever encountering the second data outcome. The streams will therefore differ substantively, without there being any inherent identifiable problem within either stream.

A further disadvantage with this arrangement is that a practical implementation of the system would likely be required to combine or copy between the resultant data in data storage in each location, i.e. between the usual storage of the stream (220) and the storage of the rebuilt and delayed stream (222). This would be so that either the two storage systems are synchronised, so that they do not conflict, or so that a single set of data can be produced from them. This then is an additional large computational burden involving a large transfer of data, requires a further large amount of data storage, and also delays any use of the final data set still further.

US 2002/0077782 describes a microcontroller unit (MCU) having a primary, or main, processing unit, a secondary processing unit coupled to the primary processing unit, and a common memory coupled to the primary and secondary processing units. A method is provided for detecting a fault in the MCU including the steps of reading a control algorithm stored in the common memory by the primary processing unit, reading the control algorithm stored in the common memory by the secondary processing unit, comparing the primary output and the secondary output and responsively detecting a fault, if the primary output does not match the second output.

WO 01/80009 describes a fault-tolerant computer system including first and second central processing units (CPUs) producing essentially identical data output streams, a voter delay buffer having a first FIFO buffer and a second FIFO buffer, and an I/O module connected to the CPUs. The I/O module includes a comparator for bitwise comparing the CPU data output streams. The first CPU data output stream is transmitted to peripheral devices if both CPU outputs remain substantially identical. Otherwise, if the comparator indicates differences, queued first and second CPU data are routed to the first and second FIFOs respectively, and subsequent data are retained in respective CPU buffers. While the CPUs continue processing, ongoing diagnostic procedures attempt to identify one or the other of the CPUs as malfunctioning and the remaining CPU as correctly-functioning. If the resulting diagnosis is inconclusive, the CPU having the lower rate of error correction is identified as being correctly-functioning. In either case, the buffered output and the subsequently processed data output stream from the correctly-functioning CPU are thereafter transmitted to the peripheral devices.

GB 2122393 describes a multiple data processing system including first and second microprocessors for executing the same data processing in a parallel fashion. A selector selectively delivers one of the output data of the microprocessors to an external I/O device. A comparator detects an off normal data processing state by comparing the output data of the first microprocessor with the output data of the second microprocessor. An operation monitor evaluates the operation state of the microprocessors in response to a signal from the comparator and instructs the selector to deliver output data sent from a normal channel to the external I/O device.

The present invention seeks to address or at least substantially reduce the above-described problems with the prior art systems.

### SUMMARY OF THE INVENTION

Aspects and embodiments of the invention are set out in the accompanying claims.

According to one aspect of the present invention, which is defined in detail in the appended independent claims 1 and 12, there is provided a system for synchronisation of independent first and second data handling systems, each of the first and second data handling systems receiving data from the same plurality of data providers, the first and second data handling systems processing first and second data streams generated from the received data from the plurality of data providers, wherein the first and second data handling systems are disposed in different locations, and wherein the first and second data streams are not quite precisely identical, but are sufficiently identical to support the purpose of the redundancy of providing the two separate data streams in the two locations, the system comprising: a) a first data handling system at a first location comprising: a first data stream generation module, comprising a first compiler for combining received data from the plurality of data providers into a first data stream; and a first processing and storage system, comprising: a first data store for storing the first data stream; a first duplicator module for duplicating data from the first data stream; a first combiner module for combining copied data from the second data stream with the first data stream; and at least one first communications port for transmitting information and/or data to and receiving information and/or data from a communications network; b) a second data handling system at a second location remote from the first location, comprising: a second data stream generation module, comprising a second compiler for combining received data from the plurality of data providers into a second data stream; and a second processing and storage system, comprising: a second data store for storing the second data stream; a second duplicator module for duplicating data from the second data stream; a second combiner module for combining copied data from the first data stream with the second data stream; and at least one second communications port for transmitting information and/or data to and receiving information and/or data from a communications network; and c) at least one comparator module for comparing information from the first and second data streams, wherein the first and second processing and storage systems are configured to, via the at least one first and second communications ports, transmit information to and from the at least one comparator module, and to transmit data between the first and second processing and storage systems, via the communications network, and wherein: i) the first and second data stream generation modules are configured to generate first and second data streams for processing and storage in the respective first and second processing and storage systems; ii) following receipt of the first and second data streams at the first and second processing and storage systems, the first processing and storage system is configured to transmit first information from a most recent section of the first data stream to the comparator module, and the second processing and storage system is configured to transmit second information from a corresponding most recent section of the second data stream to the comparator module; iii) the comparator module is configured to: compare the first and second information; measure a value for discrepancy between the first and second information; test the discrepancy value against a threshold; and, where the discrepancy value exceeds the threshold, generate: from the first and second information an indicator of which of said first data stream most recent section and said second data stream corresponding most recent section contains a higher quality of data; and a duplication instruction for the duplicator module of the respective processing and storage system whose data stream has been indicated by the indicator to contain the higher quality of data; iv) the duplicator module for the indicated data stream is configured to, if instructed, duplicate the data from said most recent section of the indicated data stream; v) the processing and storage system for the indicated data stream is configured to transmit, via the communications port, the duplicated data to the combiner module of the processing and storage system for the other stream; and vi) the combiner module for the other stream is configured to replace said corresponding most recent section of the other stream with the duplicated data from said most recent section of the indicated stream.

In an embodiment, the comparator module is configured to, following the comparing, testing, measuring steps and any generation step, insert into each of the first and second data streams a time point marker (606) indicating the end of the current section of the streams being compared, and the first and second processing and storage systems are configured to define said most recent section of the respective data stream between a most recent time point marker in the respective data stream and a current time point.

Suitably, the first information from the most recent section of the first data stream, and the second information from the corresponding most recent section of the second data stream, transmitted to the comparator module, comprise a subset of the data contained in those sections of the respective data streams.

In embodiments, the first and second data streams are each sub-divided into a plurality of data channels (602), wherein the sub-division in the first data stream corresponds to the sub-division in the second data stream, and said most recent section of the first data stream is a most recent section of a first data channel of the plurality of channels of the first data stream, and said corresponding most recent section of the second data stream is a corresponding most recent section of a corresponding first data channel of the corresponding plurality of channels of the second data stream.

Preferably, following steps (ii) to (vi), the next most recent section of the first data stream for comparison is the most recent section of a second data channel of the plurality of data channels of the first data stream, and the corresponding next most recent section of the second data stream for comparison is the corresponding most recent section of a corresponding second data channel of the corresponding plurality of channels of the second data stream.

In embodiments, the comparator module is configured to compare the first and second information, measure the value for discrepancy, and test the value against the threshold, using a sequenced hierarchy of discrepancy filters, the sequenced hierarchy of discrepancy filters proceeding from a coarse discrepancy comparison to a fine discrepancy comparison.

Suitably, the comparator module is configured to, for generation of the indicator (508) of which of said first data stream most recent section and said second data stream corresponding most recent section contains the higher quality of data: compare said first and second information using each of a plurality of qualitative comparison factors; and use the outcomes of the plurality of comparisons to generate the indicator.

Preferably, the plurality of qualitative comparison factors comprises a hierarchy of comparison factors.

In embodiments, the comparator module is operable to compare the first and second information at two or more resolutions of the first and second information, in order to measure the discrepancy and/or generate the quality indicator.

Preferably, the two or more resolutions of the first and second information are different resolutions in time of the first and second information. In an embodiment, the comparator module is operable to: compare a first time period of the first information, from said most recent section of the first data stream, and a corresponding first time period of the second information, from said corresponding most recent section of the second data stream; and following the first time period comparison, compare a first sub-period of the first time period of the first information with a corresponding first sub-period of the corresponding first time period of the second information.

According to another aspect of the present invention, there is provided a method of synchronising independent first (302, 304) and second (310, 312) data handling systems, each of the first and second data handling systems receiving data from the same plurality of data providers (301), the first and second data handling systems processing first (302) and second (310) data streams (600) generated from the received data from the plurality of data providers, wherein the first and second data handling systems are disposed in different locations, and wherein the first and second data streams are not quite precisely identical, but are sufficiently identical to support the purpose of the redundancy of providing the two separate data streams in the two locations, the method comprising: a) at a first data handling system (302, 304) at a first location: combining received data from the plurality of data providers into a first data stream (600), by a first data stream generation module (302) comprising a first compiler; and at a first processing and storage system (304): storing the first data stream at a first data store (402); duplicating data from the first data stream at a first duplicator module (404); combining copied data from the second data stream with the first data stream at a first combiner module (406); and transmitting information and/or data to and receiving information and/or data from a communications network (308) by at least one first communications port; b) at second data handling system (310, 312) at a second location remote from the first location: combining received data from the plurality of data providers into a second data stream (600) by a second data stream generation module (310), comprising a second compiler; and at a second processing and storage system (312): storing the second data stream at a second data store (402); duplicating data from the second data stream at a second duplicator module (404); combining copied data from the first data stream with the second data stream at a second combiner module (406); and transmitting information and/or data to and receiving information and/or data from a communications network (308) by at least one second communications port; and c) by at least one comparator module (306, 314), comparing information from the first and second data streams, the method further comprising, by the first and second processing and storage systems, via the at least one first and second communications ports, transmitting information to and from the at least one comparator module, and transmitting data between the first and second processing and storage systems, via the communications network, the method still further comprising: i) by the first and second data stream generation modules, generating first and second data streams for processing and storage in the respective first and second processing and storage systems; ii) following receipt of the first and second data streams at the first and second processing and storage systems, by the first processing and storage system, transmitting (502) first information from a most recent section (608) of the first data stream to the comparator module, and by the second processing and storage system, transmitting second information from a corresponding most recent section of the second data stream to the comparator module; iii) by the comparator module: comparing (504) the first and second information; measuring a value for discrepancy between the first and second information; testing (506) the discrepancy value against a threshold; and, where the discrepancy value exceeds the threshold, generating: from the first and second information an indicator (508) of which of said first data stream most recent section and said second data stream corresponding most recent section contains a higher quality of data; and a duplication instruction (422) for the duplicator module of the respective processing and storage system whose data stream has been indicated by the indicator to contain the higher quality of data; iv) by the duplicator module for the indicated data stream, if instructed, duplicating (422) the data from said most recent section of the indicated data stream; v) by the processing and storage system for the indicated data stream, transmitting, via the communications port, the duplicated data to the combiner module of the processing and storage system for the other stream; and vi) by the combiner module for the other stream, replacing (424, 707) said corresponding most recent section of the other stream with the duplicated data from said most recent section (710) of the indicated stream.

### BRIEF DESCRIPTION OF THE DRAWINGS

One or more embodiments of the invention will now be described, by way of example only, with reference to the accompanying drawings, in which:
**Figure 1** is a diagram illustrating a previously considered mirroring system;
**Figure 2** is a diagram illustrating an alternative previously considered system for redundancy in a data processing system;
**Figure 3** is a diagram illustrating a system for providing redundancy in a data processing system according to an embodiment of the invention;
**Figure 4a** is a diagram illustrating features of a component of Figure 3, according to an embodiment of the invention;
**Figure 4b** is a diagram illustrating functionality of components of Figures 3 and 4a, according to an embodiment of the invention;
**Figure 5** is a flow chart illustrating steps of a method according to an embodiment of the invention;
**Figure 6** is a diagram illustrating processing of a portion of a data stream according to an embodiment of the invention;
**Figure 7** is a diagram illustrating processing of a single channel of a data stream according to an embodiment of the invention; and
**Figure 8** is a diagram illustrating part of a processed data stream according to an embodiment of the invention.

### DETAILED DESCRIPTION

The following description sets out specific non-limiting embodiments of the present invention.

Embodiments of the invention provide methods and systems for real-time comparison of data in a pair (or more) of data streams to detect disparities, and where necessary to replace sections of one data stream with the corresponding section of the other. These embodiments allow for two independent systems (for example in different locations) being maintained as redundancy for each other to be synchronised with a sufficient degree of accuracy and timeliness. Embodiments of the invention also allow for far more efficient transfer of data between the two systems or data streams than for previously considered methods, as the on-going comparison can pinpoint exactly the parts of the stream(s) which may need to be replaced, thereby reducing the amount of data needing to be transferred.

Since the comparison is on-going or continuous, there is no need for the system to be shut down in order for the replacement of any of the given stream to be undertaken. In systems in which the final stored data is then required to be made immediately available to serve users or systems in another part of a wider system, this will prevent delays in access to that data.

In addition, since there is comparison of the resultant streams between the two locations, any discrepancies which were not apparent in previously considered systems (for example because of any latency between data sources), can be identified.

Moreover, there is actually no need for systems of the invention to be able to determine what the problem or potential problem with a data stream or feed is, or even that there is one; the comparison merely identifies a disparity between the data streams and instructs a limited replacement action if a disparity is identified. Especially in systems in which for vast amounts of data are present (for example, data sets containing millions of data points), it will commonly be nonsensical to attempt to determine whether the data in one location is better than the other; one set may well be both more and less accurate than the other at various points in the set. In previously considered systems such as that described with reference to Figure 2, this question is not only nonsensical, but is typically not even considered; the entire data set is copied from one location to the other when a problem with one stream is identified. In embodiments of the invention, the data sets are compared in very small sections (compared to the size of the stream), and in any case are compared whether or not there may be a problem with one or other stream; it is any disparity between the data sets that is determined.

In addition, embodiments of the invention are able to determine disparities between the data in the two locations at high degrees of granularity; it may for example appear on comparison that data from one location is similar to the other, but the actual difference and its significance or otherwise may only be determinable at a lower level of detail than an initial comparison. For example, embodiments of the invention allow replacement of subsets of the data, rather than the entire stream, which allows a valid data set to be constructed from the two streams even where both are partially invalid.

Furthermore, the treatment by embodiments of the invention of separate subsets of the data, and delineation by time point markers into sections of these subsets, means that the comparison processes to be performed can effectively be parcelled up or quantised, which means that system resources can be used to perform the comparisons in parallel, where this may give a performance benefit.

A further advantage of embodiments of the invention is that the comparison of the data from the two locations can be of qualitative aspects of the data, or of only parts of the data stream(s). In contrast to prior art systems in which the data sets themselves are transferred in their entirety (or indeed to some other type of system in which the entire data sets might be compared) the computational load is hence vastly reduced. Generally, comparison of data or indicators of that data is computationally cheap, whereas exchange of the data itself is computationally expensive. In embodiments of the invention, exchange of data is only ever undertaken where necessary, and only in small sections.

A still further advantage is that, in embodiments in which the data streams are stored and made available for serving for later users or systems immediately, and the comparisons are then made to improve this stored data, the data can be made available in this way instantly, and the other advantageous features of the invention can be implemented as soon as the comparisons and any copying are completed. Thus in such embodiments there may be near zero delay in providing the data to users; in some data processing systems this can be extremely important.

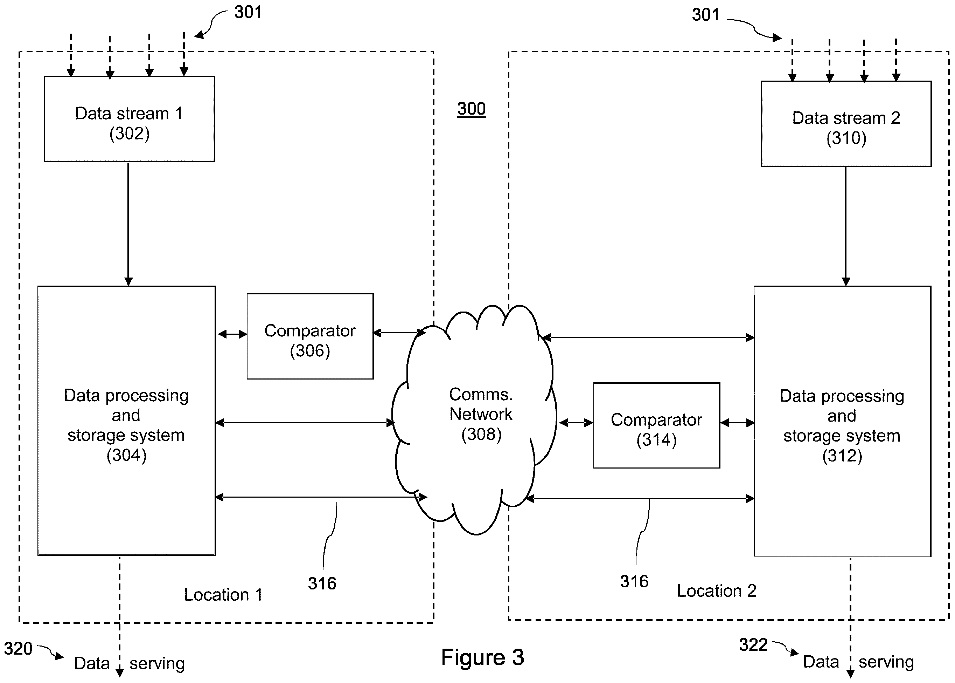

**Figure 3** is a diagram illustrating a system (300) for providing redundancy in a data processing system according to an embodiment of the invention. The data streams 1 and 2 (302 and 310) are composed or compiled from the same separate one or more data sources (not shown in **Figure 3**) in a similar fashion to that shown for the previously considered system of **Figure 2****.** The data streams receive the data from the sources via links or feeds, indicated at 301. It may be that the same single data source supplies the data for both data streams.

The means of transferring the data from the data sources to the streams for compilation may be by some sort of local communication, such as a data link or bus. In other embodiments of the invention described herein the Locations 1 and 2 are geographically separated, and thus these embodiments address the problem encountered by the previously considered system of accurately synchronising the separate systems. In such embodiments, the communication between the data sources and the streams in the separate locations may be by communications networks, such as wireless or wired wide area networks, satellite communications, telecommunications networks, or wired (landline) channels.

The data stream generated from the data of the sources may be of any type known to the art in which data from single or multiple sources can be composed into a stream for transfer or transmission. For example, the data stream may be packetized, or block- or frame-based, and may multiplex or otherwise combine separate data elements into the same stream, which may be separable at a later stage. In embodiments of the invention the data stream takes the form of a packetized multiplexed stream, in which packets of data each carry a data payload. Multiple series of packets of data can be multiplexed to provide a combined or transport stream, and later de-multiplexed to return the separate data series. In embodiments, the different data sources may provide different data series to be (or may already be) packetized in this manner, which can then be multiplexed. In addition, from the or each data source, the data provided may be in separate elements, bands or channels from that source, which may be combined or multiplexed into the same feed.

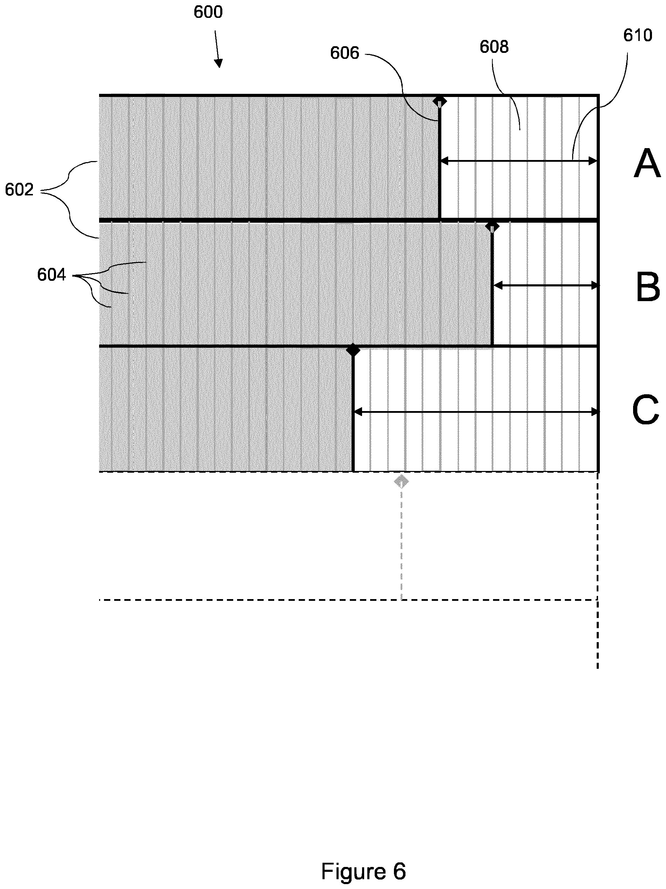

In embodiments of the invention, a data stream is composed of many discrete bands or channels of data, each data channel being made up of a series of headed data packets, each carrying a data payload. These features are described further with reference to **Figures 6** to **8****.**

The data stream is essentially a time series of data, which allows features of the methods of embodiments of the invention. The streams can be hence be compared with reference to the same direction in time, and for example (as described in more detail later) time point markers can be used to delineate the point in the stream last compared.

At each of the Locations 1 and 2, a similar or identical system is located. The generated data stream is fed to a data processing and storage system (304, 312), which provides many of the functions of embodiments of the invention. Thus data stream 1 is fed to a first processing/storage system (304), and data stream 2 to a second (312). It should be noted that, once a data stream has been received (and processed) at the respective data processing and storage systems, that data is typically made available or served (320, 322) for use by a later system or user in a wider system or arrangement requiring access to that data. For example, this may be by a common client-server relationship, with the processing/storage system acting as the server.

Each such processing and storage system communicates with a local comparator (306, 314). The first local comparator for the first processing/storage system is also in communication, via a communications network 308, with the corresponding second processing/storage system at Location 2, and the second local comparator (at Location 2) is in communication with the first processing/storage system, via the communications network. The first and second processing/storage systems are also in communication directly (316) with each other, via the network.

As will be described in more detail below, the local comparators 306 and 314 allow the comparison, in real time, of the data of data streams 1 and 2 with each other via the processing/storage systems in the separate locations (and via the communications network). Any disparities between the streams' data can be noted, and content can be copied from one stream to the other if required, for example via the direct system link 316. The provision of two comparators provides additional redundancy in the system, so that in case one comparator malfunctions, the stream comparisons (and replacements where necessary) can still be performed. Additionally, if one of the comparators is under-performing, the system can still be relied on to produce reliable synchronisation of the streams, as at least one of the comparators should at all times provide any necessary replacement of stream sections.

In an alternative embodiment, comparators 306 and 314 can be replaced by a single comparator, in a third location accessible to/from Location 1 and Location 2 via the communications network (314). This may be provided in cases where local computational power is limited, or where it is determined more efficient to use a single comparator, rather than two local comparators. For example, in certain embodiments the use of a single location for the comparator may provide an advantage of having a single arbiter of the comparison between the streams. It may also be that less computational power overall may be needed for a comparator hosted in a single location.

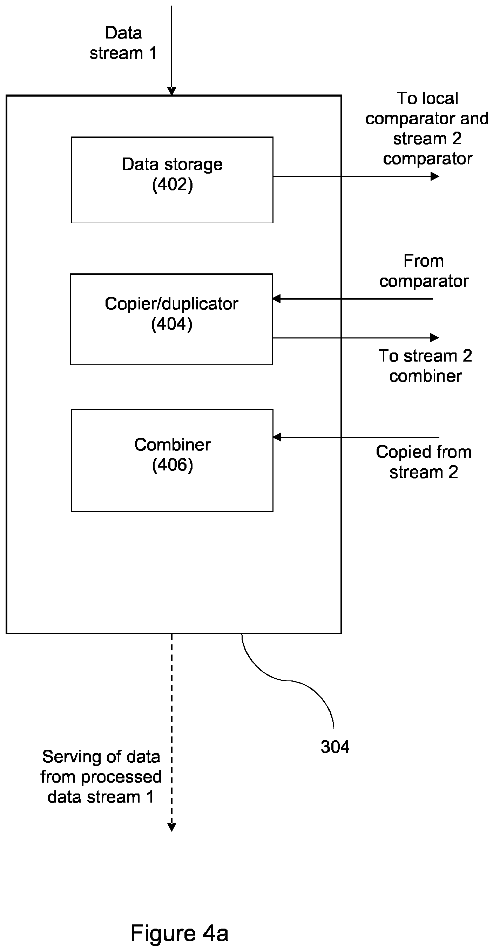

**Figure 4a** is a diagram illustrating features of the data processing and storage system (304) in Location 1 of **Figure 3****,** according to an embodiment of the invention. The processing/storage 312 at Location 2 has the same corresponding features (in communication with its own local comparator).

As shown in **Figure 3** and **Figure 4a****,** data stream 1 is received at the processing/storage system 304. The data stream can then be passed to the comparator (306 of **Figure 3**); In embodiments, the same storage means (402), such as a physical storage means, for example volatile memory means, can be used for the initial storage and for final storage (408) of the data stream. The memory can be managed using appropriate protocols to prevent over-writing of any finally stored data by new stream data being received. In embodiments, the data stream may in fact be made available or served from the processing/storage system as soon as it has been received; even if the data has not yet been compared with the other data stream for overcoming inconsistencies or disparities, it may well be that that the data in that as yet unrefined state may nevertheless be useful to the later user or system. The comparison and possible modifications of the data from data stream 1 may in this sense be viewed as improving the data stored for data stream 1, without interrupting serving of the data for the later users or systems. Indeed, it is an advantage of embodiments of the invention that there is no disruption to such serving of the data from the data stream from the processing/storage systems 304, 312, even though the comparison and modification process is carried out in real time.

Once the data stream has been received, its data can be directed (for example from the data storage 402) towards the local comparator as shown in **Figure 4a****.** Data stream 1 is also provided to the comparator at the second location. At the second location, similarly the second data stream is provided to the local comparator, and also to the Location 1 comparator. The local comparator, on determining a disparity or difference between the two data streams can provide instructions to the processing/storage system 304 to copy or duplicate a section of data stream 1 to be used to repair or conform data stream 2, by replacing a section of data stream 2. In the embodiment in **Figure 4a****,** the instructions are received from the comparator at the copier/duplicator (404). The copied data content is then provided to the processing/storage system at Location 2. In the case where it is determined that data stream 2 should provide a copied section for substitution into stream 1, the copied data is received from the Location 2 processing/storage system at a combiner (406) of the stream 1 processing/storage system (304). The combiner then replaces the corresponding section of stream 1 with the section copied from stream 2.

In any case, whether a given section of data stream 1 has been passed unmodified, or copied for transfer to data stream 2, or modified by the combiner, the resulting unmodified or modified data stream 1 can then be stored in data storage 402 of the processing/storage system 304. In this manner, the contents of the (final) data storage at each of the locations should be identical, or as near as possible: wherever there has been a disparity between the two streams, the streams have been conformed to each other by copying a section from one to the other; and the processing has been done on-the-fly, rather than pausing or shutting down to wait for a problem detection process, or for a large bulk of data to arrive.

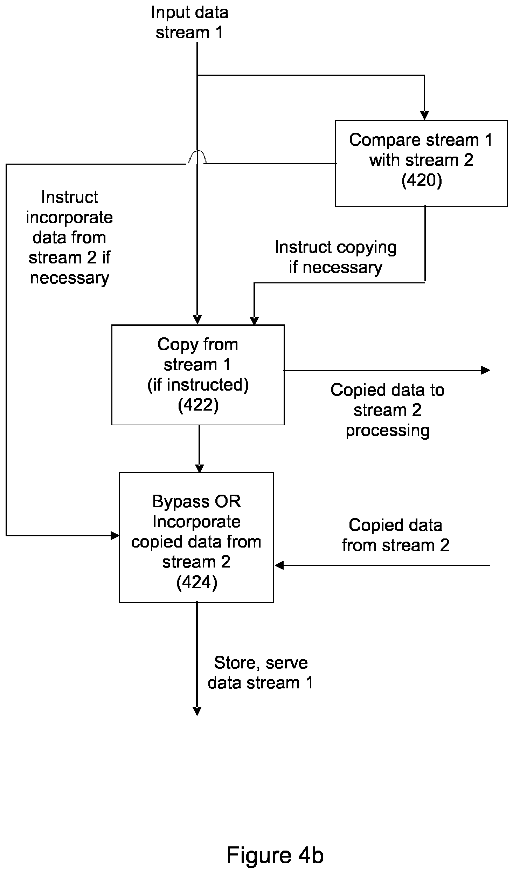

In alternative embodiments, the storage of the data stream data in each processing/storage system may be by some initial storage or buffer, which may direct the data from the stream towards the local comparator as shown in **Figure 4a****.** In such embodiments, this initial storage may be part of the data storage block 402 shown. **Figure 4b** is a diagram illustrating functionality of the processing/storage system, comparator, and communications links for data stream 1/Location 1 of **Figures 3** and **4a****,** according to an embodiment of the invention.

As described above, in Location 1 data stream 1 is input to the processing/storage system. It is then compared (420) in real time to the data of data stream 2, which is received from Location 2 (from the processing/storage system there). The comparison instructs copying of data from stream 1 if required, i.e. if a disparity or dissimilarity is found. This instruction results in the copying (422) of the relevant section of stream 1. The data copied from stream 1 is then passed to the processing/storage system for stream 2, for incorporation into data stream 2. If there is no such instruction from the comparator, no copying of stream 1 for this section is required.

If there has been no instruction to copy (422) from stream 1, it nevertheless may be that a section of data stream 1 has instead been determined by the comparator to require replacement by data from stream 2. In such case, the comparison (420) results in an instruction to incorporate (424) copied data from stream 2. The data is received from the Location 2 processing/storage system, and incorporated into the data of stream 1 (424). Once this has taken place, the data of data stream 1 can be passed back to the data store (for example, to update the data storage record from a previous unmodified form).

If there is no instruction to incorporate data from stream 2, then data stream 1 bypasses the incorporation stage, and is output for data storage.

In the embodiments described with reference to **Figures 3****,** **4** and **4a** above, there are two local comparators (306, 314), one for each local processing/storage system. It will normally of course be the case that both comparators decide the same thing for the given section of the data stream being compared at any one time, and therefore that the copier/duplicators (404) and combiners (406) may be sent instructions from both comparators to copy from one stream to the other for the given section. These instructions can be managed appropriately so that they do not compete, for example by simply filtering the instructions received at the processing/storage systems; if the same instructions are received from both comparators, the processing storage system 304 may be programmed to discard one of the (same) instructions. In alternative embodiments, the system may simply permit that both comparators instruct the same action in those cases, so that in those cases the copier/duplicator and combiner in one location may be instructed to perform the copy action twice; this will merely result in an additional copy/transfer process, as the section to be copied will necessarily be the same.

In an alternative embodiment, the timing of the comparators may be offset slightly, so that such conflicts are more rare. If the first comparator has already performed a copy/transfer for a given section of the streams, the data that the second comparator will be working from will now be the modified section from that stream, and in that case will not need to instruct the copy/transfer. In cases in which the first comparator has for some reason missed a disparity, or is malfunctioning, the second comparator will now see the disparity and carry out the copy/transfer process.

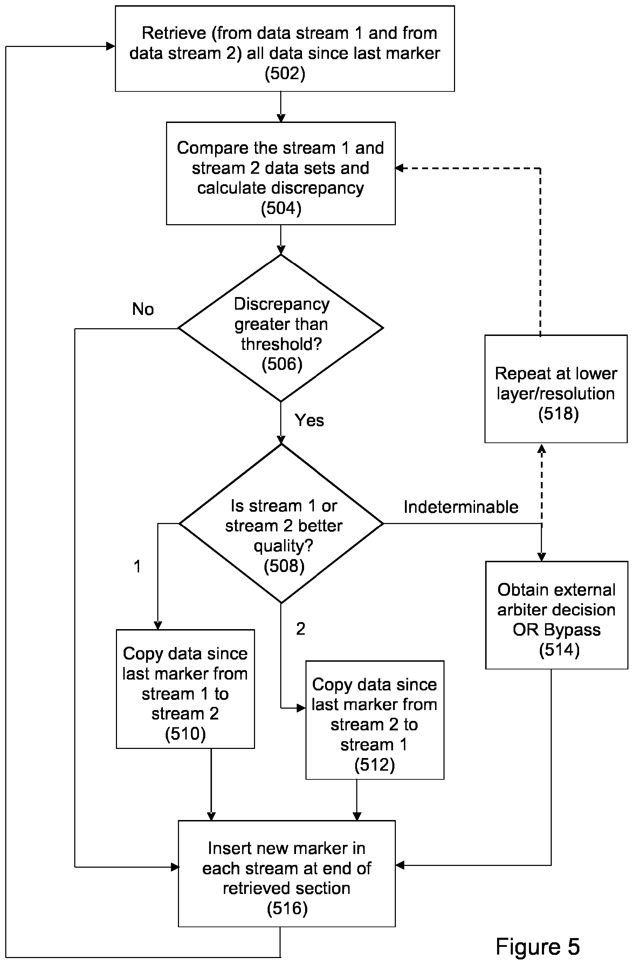

**Figure 5** is a flow chart illustrating steps of a method according to an embodiment of the invention. These steps use the infrastructure and components of the system for example as described above with reference to **Figures 3****,** **4a** and **4b****,** and can be implemented during the comparison and incorporation stages described, for example using the comparators (306, 314), copier/duplicators (404) and combiners (406) described. **Figure 5** also refers to features of **Figure 6**, a diagram illustrating processing of a portion of a data stream according to an embodiment of the invention.

First, data from data stream 1 and data stream 2 are retrieved for comparison. In embodiments, markers are inserted into the streams to indicate where the last section of compared data stream ended. At step 502 therefore, all data from both streams since the last marker in the stream is collected for comparison.

A representation of a data stream (600) according to embodiments of the invention is shown in **Figure 6**. In embodiments, the data stream is made up of separate data segments or channels 602, representing different types of data combined in the data stream. As shown here, this data stream includes channels A, B and C, and further channels D to n not shown. The number of channels can be extremely large, as long as the data amounts are sufficiently concise for the comparators to be able to cycle through the channels. For instance, in one environment handled by the inventors, 'n' was of the order of 100,000.

For example, these different segments, types of data or bands/channels may be different types of media item in a media transport stream, or different types of audio in a combined audio data stream. In other embodiments of the invention, the channels are for different types of data which are produced by the data sources; each type of data is regularly updated with new data events, and these events and associated data values are trackable within each data channel. The data channels are discrete, in that they deal with different types of data, or sometimes separate representations of the same data.

Since the data channels are discrete, they can each be treated separately, and therefore compared separately. Thus, where data stream 1 and data stream 2 are being compared, comparisons are in embodiments actually made between individual channels of those streams, for example comparing stream 1 channel A with stream 2 channel A, and so on. This allows replacement of sections in these channels, rather than in the entire stream, which allows a valid data set to be constructed from the two streams even where both are partially invalid, due to a section of different channels in each having a discrepancy with the other stream.

Each data channel in these embodiments is itself made up of blocks, frames or packets of data 604. For example, where the data stream is packetized, each channel comprises a series of data packets, each having a header and a data payload, in the manner known to the art.

For each channel, the comparison as described above with reference to **Figure 5** is made between all data in a channel since the last inserted marker. The markers 606 are inserted into the data set of each channel at the end of the comparison process, as will be described below; the next comparison always starts from that marker and collects all the data since, so that no data is ever missed or not compared.

In **Figure 6**, the direction of 'travel' of the data stream or channel is from left to right. Therefore, since the last marker 606 in channel A, there is an amount of data in a data section (608) of that channel spanned in the Figure by the arrow 610. This section 608 is therefore the data set to be compared with its counterpart from stream 2 channel A. As can be seen, the section 608 is made up of a plurality of the data packets 604. All data before the marker 606 has already been compared in previous comparison operations.

The corresponding section from data stream 2 will also be identified, in parallel, in exactly the same way. That is to say, channel A of stream 2 will have had a marker 606 inserted at the corresponding point in the channel data stream, for example at the same numbered packet, or time stamp. The comparison will be instructed for the same comparator (either 306 or 314) and therefore the end, cut-off or initiation point will be the same for both streams; for example it may be stipulated that the same number of packets be collected for each channel since the last marker, or that a given amount of time elapse since the last marker was inserted before the cut-off for comparison. Therefore the sections of the two data streams to be compared are as close to identical as possible for the comparison to be undertaken.

This process of marking, selection and identification of the section to be compared with its counterpart can be undertaken in the comparators (306, 314) themselves, with the data streams 1 and 2 constantly being fed to them. However, in an alternative embodiment, if the comparators are required to only process the comparison in order to conserve processing power, the marking, selection and identification of the sections for comparison can be undertaken in the processing/storage systems (304, 312) before being passed to the comparators. For example, these steps can be undertaken in or in concert with the initial storage/buffer 402.

It may be noted that the fact that the channels can be treated separately, and that time point markers are used to delineate sections of those channels, means that the function of the comparators can be fully independent of both the data stream(s) and indeed of each other, and can be seen as simply enhancing the data being stored for each stream. Each comparator action on corresponding sections of the streams is effectively parcelled up for a comparator to perform, which means that each comparator can be in any location, and indeed that there can be any number of them; if the processing of the stream is to be sped up, additional comparators can be used in parallel.

Returning to **Figure 5**, now that the section of stream 1 for comparison has been identified, and the corresponding section from stream 2 will have been identified in exactly the same way, these two data sets are retrieved (502) for comparison. The data sets are duly compared (504) and a discrepancy between the data sets is calculated. The discrepancy between the data sets, and which of them may be preferable to be copied from, can be calculated in a number of ways, based on one or more of a plurality of factors associated with the respective channel stream sections received.

These sections will, as noted above, be largely identical. The same data sources are used for the data streams 1 and 2; they are compiled in the same way; the processing of the streams is done in the same way throughout the components described above. However, especially in certain types of data processing environments where the amounts of data are vast, and the number of new data events or items of data issued per second is also very large, there will inevitably be discrepancies between two such data streams, even if the means of producing them are carefully constructed to avoid any such discrepancy. In an environment observed by the inventors for instance, the storage is of petabytes of data, and there are five billion data items being logged per second.

As an example, the comparative timing of the data streams in such environments will inevitably drift from time to time. One of the data sources being used may for some reason drop a datum or packet in transmitting to one Location, but not to the other. These examples are before consideration of any inherent problems in having the data streams hosted in different geographic location; links or feeds from sources to the different locations may behave differently, for example. The example given above regarding the previously considered system of Figure 2 is one; if data from different sources are received at different times, the data outcomes noted in the two streams may differ substantively, without there being any inherent problem with either stream.

However, methods and systems of embodiments of the invention take advantage of the notion that the final stored data sets arrived at need not be entirely identical (as this might in the extreme involve always copying one or other stream to the other), but merely that the final sets should be as similar as possible to make the redundancy between the two final sets sufficiently useful, whilst removing the larger discrepancies between the streams. Hence the use of a threshold allows some very small discrepancies to pass, while more significant ones are dealt with.

Methods and systems of embodiments of the invention therefore seek to determine any differences between the corresponding latest channel stream sections. The determination of the difference can then be used in conjunction with a measure of a difference in quality of the streams; however, there may be both qualitative and quantitative factors which are included in assessment of which stream/channel is of better quality.

The difference(s) may simply be in the content of the data sets; for example, it may that the content of one (or more) of the data packets contained in the section from channel A of stream 1 differs slightly from that of the section from channel A of stream 1. For instance, a simple parameter or data value may differ, perhaps only in one data packet or datum within that packet. For instance, it may be that an accumulating value of a parameter in one data channel has reached a higher value in the current section of that channel from stream 2, than in the corresponding section of that channel from stream 1. In another example, a (or a plurality of) second order parameter(s) relating to the data in a section or packet may be compared, such as a signal-to-noise ratio for the two data sets being compared.

These factors may be determined by a simple comparison of values in simple cases, and for more complex data a similarity measure as common in the art could be used to compare data and establish a level of difference or discrepancy. A simple measure of this sort of feature would be a time stamp on a given data packet header. For example, it may be for some reason that a certain data event was determined to have occurred at one time according to the data compiled into data stream 1, but was determined to have occurred at a slightly later time according to data stream 2.

Other detectable differences between the data sets are associated with the structural level of the data stream. For example, the sections of the (channel of the) data stream may differ in the number of data packets, blocks or frames which have been collected in the period since the last marker, or conversely in the length of the period since the last marker in which the last of a given number of data packets arrived.

Potential differences can also be tracked throughout a given session of processing, to further indicate whether a difference is significant. For example, if a certain data parameter differs between the data sets by an amount, if this amount of difference is a common occurrence for this data channel, as indicated by the tracking, it may be that the difference can be determined as inconsequential.

Other disparities between the data streams will be more immediately obvious than subtle changes in data content or stream/channel length or timing. For example, if one data stream fails completely, the comparators will have nothing to compare from one feed. Other more significant problems, which may be noted with little processing, may include that the data stream is corrupted in some way, that the data content is garbled in some way, or completely mistimed rather than entailing a slight delay that might be expected.

In embodiments of the invention, the data sets from the two streams can be compared using a combination of factors such as those described above, in order to provide a more accurate assessment of the comparison. For example, it may be that a minor timing disparity is not significant, but when combined with differences elsewhere the quality is sufficiently lower in one stream than the other to warrant replacing that section with the data from the other stream. In embodiments, each type of factor may be compared and have its own different threshold; a timing disparity may have a lower threshold than a certain type of data disparity, for example.

In embodiments, the factors assessed can be layered or ordered; for example an assessment of whether the stream is present at all can quickly rule out(in) whether there is a serious outage. The assessment can then if necessary proceed to more subtle comparisons.

In embodiments of the invention, comparisons (for either calculating discrepancy, or for determining comparative quality) can also be made at different levels of the data streams. For example, rather than merely assessing each channel over a similar period, and entering markers at the last assessment point as illustrated in **Figure 6****,** additional levels of comparison may be made comparing longer or shorter periods of the data stream channels. For example, if the period (610) indicated since the last marker in this case is one hour, other comparisons may be made (during this same section, for example) over ten minute, one minute, or even one day periods. Particular embodiments using this feature will be described in more detail below, with reference to Figures 5 and 6.

It may also be that different types of discrepancy are used to prompt checks on other types of discrepancy, or on types of quality difference. For example, if there is an obvious problem with one stream, the copy/transfer process will be straightforwardly instructed, but it there is no obvious problem, the system may then prompt a check for discrepancy of a next given type, and then of timing. Similarly, if the discrepancy has been identified, the check for quality comparison may start with a more obvious quality difference indicator, and if passed then check for more subtle indicators, or at higher time resolutions (see below).

Returning to **Figure 5****,** once the comparison (504) has been made, a determination is made as to whether the discrepancy or disparity between the data sets is greater than a threshold (506). For example, if it has been determined that one data stream indicates that a data event happened at time t, and the other indicates that it happened at time t+10 seconds, this may not be considered significant enough in order to warrant incurring the computational cost of transferring the data set from the other stream for incorporation. If in an extremely large data set there is a difference of n in a parameter in one channel between the streams, it may be that this can be ignored. However if the difference is 500n, it may be acted upon.

The threshold can also be evaluated in view of the history of differences in a certain stream or channel. For example, if a general amount of difference in one type of data can be tolerated, as the tracking indicates this difference is common, the threshold can be set with this in mind.

Using this method, systems of the invention can cut down on needless transferring of data where the streams are not quite precisely identical, but are sufficiently identical to support the purpose of the redundancy of providing the two separate data streams in the two locations. For example, as noted above in contrast with previously considered systems there is no need to transfer whole streams of data. Of course, in certain environments, the redundancy will require that the data streams are more precisely identical than in others; in such cases, the threshold and the associated amount of computational power required can be tuned to the appropriate outcome for that environment.

This method also entails that there is actually no particular need to know whether or not there is a problem with either of the data streams. In a case in which the data streams disagree slightly on the timing of a data event, if the streams are compiled from the same source, it may not even be determinable in an objective sense which of the streams is 'correct'. It is merely sufficient to compare the streams, and determine whether there is a disparity, and if the disparity is significant enough to determine the better quality stream and copy from that stream to the other.

If it is determined at 506 that the discrepancy is not greater than the threshold, the process proceeds to insert (516) a new marker (606) into the data channel to indicate the end of the section that has been compared, and where the next comparison should start. The process can then repeat, beginning at the first step 502 for the next section of the channel.

If it is determined that the discrepancy is greater than the threshold, the process continues to block 508, to determine which of the streams 1 and 2 has the better quality data in this section of the data channel being compared. It may be as noted above that quality (or qualitative) measures have already been determined in the comparison stage. For example, it may have been determined that one of the streams contains corrupted data; this can be readily used as a measure of which stream is better quality, and should therefore be used to replace the data in the other.

It may well often be clear which stream is of better quality, as the stream having data which is more obviously disparate from, for example, a tracked trend in that data will have been picked up at the comparison stage, and this stream will thus have its data replaced. However, there may be various situations in which the comparison is conclusive as to whether there is a disparity, but inconclusive as to which stream should be copied to replace the section in the other stream. A simple example might be both streams having a different value for a parameter, but both diverging from a trend or mean by a similar amount.

In embodiments of the invention, the data sets from the two streams are compared using a combination of quality indicators, which may include factors such as those described above in comparing the streams, so that an overall comprehension of the relative quality of the streams can be determined. For example, it may have been determined in comparison that a parameter differs between the data sets of the channel being processed, but it may require additional comparative assessments to find out which is the better stream to use to replace the other. For example, it may be that the first parameter is different significantly in one stream from previous values; this may indicate that this stream's section should be replaced.

In embodiments, determination of comparative quality between the streams will usually be carried out based on prima facie factors concerning the data in the streams themselves. For example, if a data outcome in one stream is indicated as 'X', and the amount of cumulative data events in that stream is high, but the outcome in the other stream is 'Y', and the amount of cumulative data events in that stream is very low, it may be assumed that the outcome 'X' is the correct one, and therefore that the first stream is of better quality. Such comparisons may indicate quality directly, or a cumulative score of such comparisons for the sections being compared may be used.

A common usable factor is whether the data in one stream is nonsensical or self-evidently wrong for some reason. For example, one stream might indicate that a data event outcome has occurred where it is clear from the rest of the section being compared that this outcome is not yet due. One stream may indicate a 'high' value whose absolute value is lower than the indicated 'low' value. A packetized stream may include a frame which does not refer in the usual way to its contents, or to the following and preceding frames.

Once the determination is made (508) of which stream is better quality, the respective copying action can be chosen. Where stream 1 is determined to be better quality for this section of the current channel, the data since the last marker from stream 1 in that current channel is copied (510) from stream 1, and replaces the corresponding section of the current channel in stream 2, since the last marker. Similarly, if stream 2 is determined to be superior, the opposite transaction occurs (512).

In some cases it may be indeterminable which stream is the better quality stream, once a disparity is identified. In such a case, it may be that in the interest of efficiency and progressing with storage of the streams the system bypasses (514) the copy/replace stage for this section, and inserts the new marker (516) ready to start on the next section. In an alternative, an external arbiter (514) is used to evaluate the better quality stream. This might be a separate dedicated component or application with greater computational power, which might only be used for these rare occurrences, or it may be a user or supervisor of the system who is given the data to review and requested to return a decision.

In another embodiment, if the section length for the comparator is a given period of the channel(s), the system can be prompted to not insert a marker if the quality determination is not made. This would mean that the next round of assessment of quality would be made effectively over two sections or periods of the channel; this may yield a result where the shorter period did not.

In another embodiment, it may be that in indeterminate cases, a default option to copy one stream (say, stream 1) to the other is carried out.

In an embodiment, in such indeterminable cases, it may be that a different level or resolution of the streams may be used for comparison. This is indicated in Figure 5 as an alternative output (518) from the quality assessment (508), which returns to the stage of comparing the two streams to calculate the discrepancy (504), but this time at the different level/resolution.

For example, it may be that the section being compared from the streams is a one hour period. It may be indeterminable which is the better stream, so the process may be repeated at ten minute intervals within that one hour section; each ten minute section may be compared with its ten minute counterpart section in the other stream; this may be repeated along the section of the original one hour section until the ten minute section with differing quality is identified. Indeed, if the comparison of each ten minute section is also indeterminable, it may be that a further higher resolution/lower level may be attempted, for example five minute or one minute sections.

A further advantage of this feature is that if a quality difference is identified at a lower level, then the copy and transfer process can be implemented for just this section (e.g. ten minutes) rather than at the higher level (one hour). This will of course require much less exchange of data, and less computational load.

This feature may be particularly useful where the discrepancy identified (506) is significantly greater than the threshold, but the quality determination is indeterminable. In embodiments, the system may only be prompted to investigate (518) at lower levels where this is the case (perhaps at a percentage rate over the threshold), and in others to bypass (514).

It may also be that the initial comparison of the initial (one hour, for example) sections indicates that there is no appreciable quality difference at the one hour level, but that there is an indicator that lower levels may give a quality difference; in such cases, the system would be prompted to investigate (518).

Furthermore, these features of course avoid the need to compare all the available data of the entire section of data; for example, since the comparison at the one hour level is at a lower resolution in the data, there is not a comparison of all the data that would be available at the highest resolution (say, one minute, or one second). The higher resolution can be used, but only when required as above. This arrangement, which could be viewed as being similar to a Fenwick tree arrangement, will of course be much more efficient than comparing all the data.

It can also be noted that, if it is only a higher resolution (minute) portion of a section of a stream that is copied over to the other stream, this may in certain types of data stream result automatically in the re-calculation in the stream of the data covering the wider (hour) section; thus the change at the higher level/lower resolution can be effected simply by copying a small piece of the stream.

Certain data sets may have parameters which at a given time resolution can indicate qualitative or quantitative features of higher time resolution layers in the data. For instance, at a one hour resolution a data outcome may have higher and lower bounds, and these bounds may appear to be the same in the two streams. However, it may be that in one stream, there was a much larger number of data events in the first ten minute period, than in the other stream. An indicator of this higher resolution may be included in the lower resolution data; for example the one hour data might include the higher and lower data bounds, but also total number of data events in the one hour period, or even the total number of data events per ten minute period. Thus an initial comparison of the one hour period which appears similar may find an indicator of a difference at a higher resolution, which can then be investigated to find that one ten minute period had much different higher and lower data bounds than in its counterpart in the other stream.

The appropriate use of this multi-resolution comparison feature may be determinable on the basis of the period of the section that was most recently assessed; if the last section (610) that was compared was one hour long, the system will typically be prompted to continue at that level of resolution for the next section comparison, and only to proceed to higher resolution if indicated as above.

In certain circumstances, it may even be determined that indicators of differences at higher time resolutions are not required or relevant. For instance, if the current sections being compared happen to be an entire day, and there is an indicator that there may be a quality difference at the one minute level, it may be that such a difference for the given system running is tolerable, i.e. that the two independent streams/data sets in the two locations do not need to be redundant to that level for the current period.

Once either the copy and incorporation has been made, or the discrepancy been determined lower than the threshold, or the external arbiter has ruled or the quality assessment has been bypassed, a new marker is inserted (516) at the end of the current section, and the process begins again, assessing the next corresponding sections.

In additional embodiments of the invention, it may be that the data in processing/storage systems 304 and 312, more than merely being made available in its time series state to later users or systems, can also be packaged or re-cast into a (now modified) data stream to be sent or broadcast to another system or location. In such embodiments, it may be noted that, if the difference identified between the streams at the comparison stage is that they are out of time with each other (or that a different number of packets has been received) then even if a replacement is made, the timing/numbering may still be disparate. Thus in the case of broadcasting the modified stream, in some cases, this situation will be solved somewhat automatically, as the section being copied from the stream determined to be the better quality one can extend the lower quality stream back to a matching length, so that the timing/numbering now matches. For example, if stream 2 is short by one packet, the section used as the replacement from stream 1 will be one packet longer than the section identified in stream 2, so stream 2 will now be the right length. In situations where this does not happen automatically, the stream having a section replaced can be re-timed, or have any gap plugged with null packets, in order to correct the additional disparity.

It should be noted that the system can at all stages of the process shown in **Figure 5** log statistics relating to the comparisons, quality determinations and copying actions taken. These statistics may aid further iteration of algorithms used for comparison and/or quality determination.

As can be seen from the flow chart, the process illustrated in **Figure 5** is repetitive and continuous. In embodiments, the data streams 1 and 2 are constantly being compared, and no part of the stream is left uncompared at any point, as each section of each channel of both data streams follows the previous into the comparison stage in the comparator(s).

Another advantage of this method is that the sections which are being compared between streams are short. This means that the computational load is low, so the comparators can work in real time, rather than having to pause or shut down the system. A further advantage is that the comparison assessments can be kept simple, such as only checking for a timing disparity. This also permits low computational load, and thus real time application.

Returning now to **Figure 6****,** in embodiments of the invention once the assessment has been made for the section 608 in channel A, and any replacement of or by that section has been completed, a new marker 606 will have been inserted into channel A, from which the next comparison in channel A will be made. The process of **Figure 5** then proceeds to assessment of the next channel in the stream, channel B. In the same way, all data from the last marker 606 in channel B is now compared with the corresponding channel B section in stream 2. Following this, the assessment is made on the latest section of channel C, and so on.

It may be noted that the sections 608 for the channels A, B and C appear to be different lengths, i.e. that the indicator arrow 610 from the latest marker to 'present' is different for each channel. This is because in embodiments of the invention the comparator takes a standard period of time (or as near to it as will fit an integer number of data packets in the current channel) from the latest marker for each channel. Since the data density will vary within each channel, and indeed between channels, that is, the data packet payloads in the channels may differ significantly in size from one to the next, the amount of data payload processable in the standard time period will vary. Note that the differences shown in Figure 6 are exaggerated for ease of reference; in practice, the differences between sizes of the data payloads will usually be small.

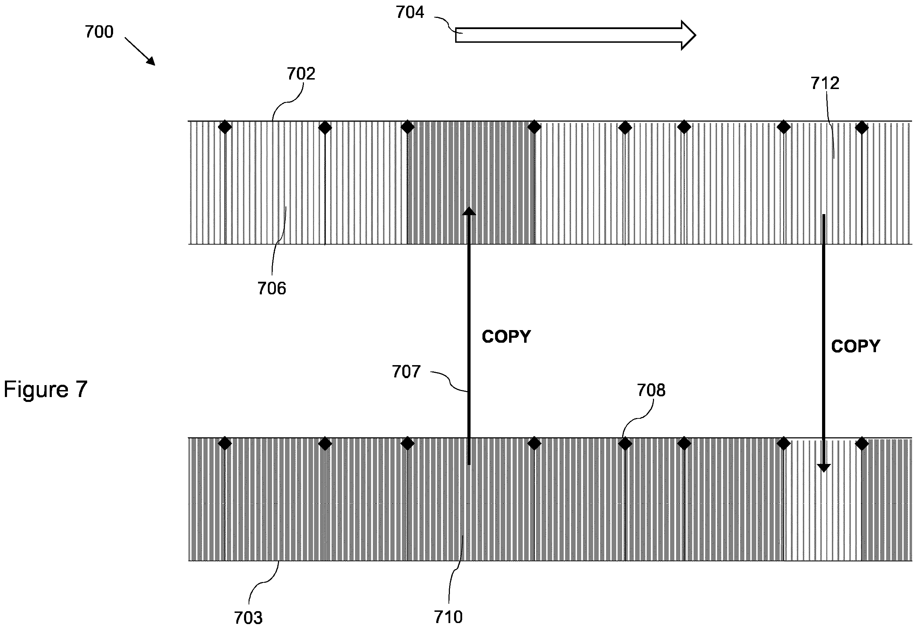

**Figure** 7 is a diagram illustrating processing (700) of a single channel 702 of data stream 1, and the corresponding single channel 703 from data stream 2, according to an embodiment of the invention. As can be seen, this entails that essentially the channels are identical; the packet rate is the same, and the markers (708) are in the same places. Here, the stream 1 data is coloured in a lighter shade than the stream 2 data, in order to facilitate understanding only. Direction of 'travel' of the data channels is indicated by the arrow 704. Each channel of data is as described above made up of packets of data, and comprises sections of data (706, 710, 712) which are compared with each other, as described above.

As can be seen in the Figure, the first few sections of the channels are compared, with no copying or replacement being necessary. At the section 710 in the channel data from stream 2, the sections have been compared, a disparity identified, and the stream 2 data identified as superior, so this section of the channel data from stream 2 is copied (707) and incorporated into the stream 1 channel data. Similarly, later a section 712 of the stream 1 data is copied and incorporated into the stream 2 channel data. Note that replacements of sections of channels in typical data streams will likely actually occur much less frequently than indicated here.

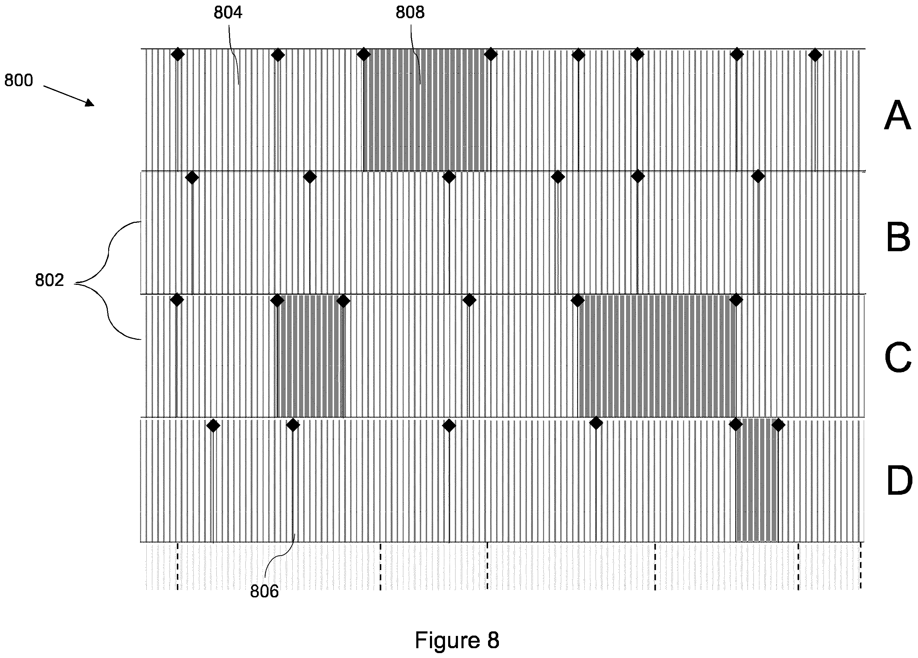

**Figure 8** is a diagram illustrating part (800) of data stream 1 processed according to embodiments of the invention. The data stream, again made up of channels A, B, C and D to n (802) and sections within those channels (804) subdivided by markers 806, has been processed as described above. Thus, certain sections (808), again indicated by the darker shading, have been replaced by the corresponding sections from data stream 2.

A further advantage of the invention is that since the channels in each data stream are treated separately, a finer granularity of comparison and replacement of problem sections can be undertaken. This means that in a data stream which might otherwise be very high quality, a small section of a data channel of the stream can be replaced, whereas for the remainder of the stream this stream will usually be used to provide replacements to the other stream. This is in contrast to previously considered methods in which whole streams would be rebuilt using the entire contents of another stream.

Embodiments of the invention as described above will comprise computational hardware components and processor devices. These may include software and/or hardware for providing functionality and features described herein. The devices may therefore include one or more of logic arrays, memories, analogue circuits, digital circuits, software, firmware and processors. The hardware and firmware components of the devices may include various specialized units, circuits, software and interfaces for providing the functionality and features described herein. Processors may be or include one or more microprocessors, application specific integrated circuits (ASICs), programmable logic devices (PLDs) and programmable logic arrays (PLAs).

Data storage may be provided by computer memory, which may be or include RAM, ROM, DRAM, SRAM and MRAM, and may include firmware, such as static data or fixed instructions, BIOS, system functions, configuration data, and other routines used during the operation of the devices and processors. Large volume or long-term data storage may take the form of a disk, tape, DVD, or other reasonably high capacity addressable or serial storage medium. Multiple storage devices may be provided or available to the devices.

Processors and/or controllers may comprise one or more computational processors, and/or control elements having one or more electronic processors. Uses of the term "processor" or "controller" herein should therefore be considered to refer either to a single processor, controller or control element, or to pluralities of the same; which pluralities may operate in concert to provide the functions described. Furthermore, individual and/or separate functions of the processor(s) or controller(s) may be hosted by or undertaken in different control units, processors or controllers.

To configure a processor or controller, a suitable set of instructions may be provided which, when executed, cause said control unit or computational device to implement the techniques specified herein. The set of instructions may suitably be embedded in said one or more electronic processors. Alternatively, the set of instructions may be provided as software to be executed on the device.

It may be noted that, since the comparator components are so efficient, by processing small sections of data repeatedly, and cycling through the data channels in the data streams, these components (or applications running these components) can be comparatively small, and occupy small amounts of system resources. In addition, the comparisons as noted above can be run by applying separate instances of a comparator component to sections of a data stream; for example, three comparators may each work on a third of the data stream. In this manner the cycle length needed for processing the whole stream can be reduced by applying more comparators. This in turn can reduce the period (610) for each data channel since the latest marker, because this period is generally determined by the length of time it takes for the comparator(s) to cycle through comparison of each of the data channels with their counterparts in the other stream.

Many modifications may be made to the above examples without departing from the scope of the present invention as defined in the accompanying claims.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

## Claims

1. A system (300) for synchronisation of independent first (302, 304) and second (310, 312) data handling systems, each of the first and second data handling systems receiving data from the same plurality of data providers (301), the first and second data handling systems processing first (302) and second (310) data streams (600) generated from the received data from the plurality of data providers, wherein the first and second data handling systems are disposed in different locations, and wherein the first and second data streams are not quite precisely identical, but are sufficiently identical to support the purpose of the redundancy of providing the two separate data streams in the two locations, the system comprising:
a) a first data handling system (302, 304) at a first location comprising:
a first data stream generation module (302), comprising a first compiler for combining received data from the plurality of data providers into a first data stream (600); and
a first processing and storage system (304), comprising:
a first data store (402) for storing the first data stream;
a first duplicator module (404) for duplicating data from the first data stream;
a first combiner module (406) for combining copied data from the second data stream with the first data stream; and
at least one first communications port for transmitting information and/or data to and receiving information and/or data from a communications network (308);
b) a second data handling system (310, 312) at a second location remote from the first location, comprising:
a second data stream generation module (310), comprising a second compiler for combining received data from the plurality of data providers into a second data stream (600); and
a second processing and storage system (312), comprising:
a second data store (402) for storing the second data stream;
a second duplicator module (404) for duplicating data from the second data stream;
a second combiner module (406) for combining copied data from the first data stream with the second data stream; and
at least one second communications port for transmitting information and/or data to and receiving information and/or data from a communications network (308);
and
c) at least one comparator module (306, 314) for comparing information from the first and second data streams,
wherein the first and second processing and storage systems are configured to, via the at least one first and second communications ports, transmit information to and from the at least one comparator module, and to transmit data between the first and second processing and storage systems, via the communications network,
and wherein:
i) the first and second data stream generation modules are configured to generate first and second data streams for processing and storage in the respective first and second processing and storage systems;
ii) following receipt of the first and second data streams at the first and second processing and storage systems, the first processing and storage system is configured to transmit (502) first information from a most recent section (608) of the first data stream to the comparator module, and the second processing and storage system is configured to transmit second information from a corresponding most recent section of the second data stream to the comparator module;
iii) the comparator module is configured to: compare (504) the first and second information; measure a value for discrepancy between the first and second information; test (506) the discrepancy value against a threshold; and, where the discrepancy value exceeds the threshold, generate:
from the first and second information an indicator (508) of which of said first data stream most recent section and said second data stream corresponding most recent section contains a higher quality of data; and
a duplication instruction (422) for the duplicator module of the respective processing and storage system whose data stream has been indicated by the indicator to contain the higher quality of data;
iv) the duplicator module for the indicated data stream is configured to, if instructed, duplicate (422) the data from said most recent section of the indicated data stream;
v) the processing and storage system for the indicated data stream is configured to transmit, via the communications port, the duplicated data to the combiner module of the processing and storage system for the other stream; and
vi) the combiner module for the other stream is configured to replace (424, 707) said corresponding most recent section of the other stream with the duplicated data from said most recent section (710) of the indicated stream.

2. The system of Claim 1, wherein the comparator module is configured to, following the comparing, testing, measuring steps and any generation step, insert into each of the first and second data streams a time point marker (606) indicating the end of the current section of the streams being compared,
and wherein the first and second processing and storage systems are configured to define said most recent section of the respective data stream between a most recent time point marker in the respective data stream and a current time point.

3. The system of Claim 1 or Claim 2, wherein the first information from the most recent section of the first data stream, and the second information from the corresponding most recent section of the second data stream, transmitted to the comparator module, comprise a subset of the data contained in those sections of the respective data streams.

4. The system of any preceding claim, wherein:
the first and second data streams are each sub-divided into a plurality of data channels (602),
wherein the sub-division in the first data stream corresponds to the sub-division in the second data stream,
and wherein said most recent section of the first data stream is a most recent section of a first data channel of the plurality of channels of the first data stream, and said corresponding most recent section of the second data stream is a corresponding most recent section of a corresponding first data channel of the corresponding plurality of channels of the second data stream.

5. The systems of Claim 4, wherein following steps (ii) to (vi), the next most recent section of the first data stream for comparison is the most recent section of a second data channel of the plurality of data channels of the first data stream, and the corresponding next most recent section of the second data stream for comparison is the corresponding most recent section of a corresponding second data channel of the corresponding plurality of channels of the second data stream.

6. The system of any preceding claim, wherein the comparator module is configured to compare the first and second information, measure the value for discrepancy, and test the value against the threshold, using a sequenced hierarchy of discrepancy filters, the sequenced hierarchy of discrepancy filters proceeding from a coarse discrepancy comparison to a fine discrepancy comparison.

7. The system of any preceding claim, wherein the comparator module is configured to, for generation of the indicator (508) of which of said first data stream most recent section and said second data stream corresponding most recent section contains the higher quality of data:
compare said first and second information using each of a plurality of qualitative comparison factors; and
use the outcomes of the plurality of comparisons to generate the indicator.

8. The system of Claim 7, wherein the plurality of qualitative comparison factors comprises a hierarchy of comparison factors.

9. The system of any preceding claim, wherein the comparator module is operable to compare the first and second information at two or more resolutions of the first and second information, in order to measure the discrepancy and/or generate the quality indicator.

10. The system of Claim 9, wherein the two or more resolutions of the first and second information are different resolutions in time of the first and second information.

11. The system of Claim 10, wherein the comparator module is operable to:
compare a first time period of the first information, from said most recent section of the first data stream, and a corresponding first time period of the second information, from said corresponding most recent section of the second data stream; and
following the first time period comparison, compare a first sub-period of the first time period of the first information with a corresponding first sub-period of the corresponding first time period of the second information.

12. A method of synchronising independent first (302, 304) and second (310, 312) data handling systems, each of the first and second data handling systems receiving data from the same plurality of data providers (301), the first and second data handling systems processing first (302) and second (310) data streams (600) generated from the received data from the plurality of data providers, wherein the first and second data handling systems are disposed in different locations, and wherein the first and second data streams are not quite precisely identical, but are sufficiently identical to support the purpose of the redundancy of providing the two separate data streams in the two locations, the method comprising:
a) at a first data handling system (302, 304) at a first location:
combining received data from the plurality of data providers into a first data stream (600), by a first data stream generation module (302) comprising a first compiler; and
at a first processing and storage system (304):
storing the first data stream at a first data store (402);
duplicating data from the first data stream at a first duplicator module (404);
combining copied data from the second data stream with the first data stream at a first combiner module (406); and
transmitting information and/or data to and receiving information and/or data from a communications network (308) by at least one first communications port;
b) at second data handling system (310, 312) at a second location remote from the first location:
combining received data from the plurality of data providers into a second data stream (600) by a second data stream generation module (310), comprising a second compiler; and
at a second processing and storage system (312):
storing the second data stream at a second data store (402);
duplicating data from the second data stream at a second duplicator module (404);
combining copied data from the first data stream with the second data stream at a second combiner module (406); and
transmitting information and/or data to and receiving information and/or data from a communications network (308) by at least one second communications port;
and
c) by at least one comparator module (306, 314), comparing information from the first and second data streams,
the method further comprising, by the first and second processing and storage systems, via the at least one first and second communications ports, transmitting information to and from the at least one comparator module, and transmitting data between the first and second processing and storage systems, via the communications network,
the method still further comprising:
i) by the first and second data stream generation modules, generating first and second data streams for processing and storage in the respective first and second processing and storage systems;
ii) following receipt of the first and second data streams at the first and second processing and storage systems, by the first processing and storage system, transmitting (502) first information from a most recent section (608) of the first data stream to the comparator module, and by the second processing and storage system, transmitting second information from a corresponding most recent section of the second data stream to the comparator module;
iii) by the comparator module: comparing (504) the first and second information; measuring a value for discrepancy between the first and second information; testing (506) the discrepancy value against a threshold; and, where the discrepancy value exceeds the threshold, generating:
from the first and second information an indicator (508) of which of said first data stream most recent section and said second data stream corresponding most recent section contains a higher quality of data; and
a duplication instruction (422) for the duplicator module of the respective processing and storage system whose data stream has been indicated by the indicator to contain the higher quality of data;
iv) by the duplicator module for the indicated data stream, if instructed, duplicating (422) the data from said most recent section of the indicated data stream;
v) by the processing and storage system for the indicated data stream, transmitting, via the communications port, the duplicated data to the combiner module of the processing and storage system for the other stream; and
vi) by the combiner module for the other stream, replacing (424, 707) said corresponding most recent section of the other stream with the duplicated data from said most recent section (710) of the indicated stream.

## Patentansprüche

1. System (300) zur Synchronisierung eines unabhängigen ersten (302, 304) und eines unabhängigen zweiten (310, 312) Datenbehandlungssystems, wobei das erste und das zweite Datenbehandlungssystem jeweils Daten von derselben Vielzahl von Datenlieferanten (301) empfangen, wobei das erste und das zweite Datenbehandlungssystem einen ersten (302) und einen zweiten (310) aus den empfangenen Daten von der Vielzahl von Datenlieferanten erzeugten Datenstrom (600) verarbeiten, wobei das erste und das zweite Datenbehandlungssystem an verschiedenen Orten angeordnet sind, und wobei der erste und der zweite Datenstrom nicht ganz genau identisch sind, aber ausreichend identisch sind, um den Zweck der Redundanz des Bereitstellens der zwei getrennten Datenströme an den zwei Orten bereitzustellen, wobei das System Folgendes umfasst:
a) ein erstes Datenbehandlungssystem (302, 304) an einem ersten Ort, umfassend:
ein erstes Datenstromerzeugungsmodul (302), umfassend einen ersten Kompiler zum Zusammenführen empfangener Daten von der Vielzahl von Datenlieferanten zu einem ersten Datenstrom (600); und
ein erstes Verarbeitungs- und Speichersystem (304), umfassend:
einen ersten Datenspeicher (402) zum Speichern des ersten Datenstroms;
ein erstes Duplikatormodul (404) zum Duplizieren von Daten aus dem ersten Datenstrom;
ein erstes Kombinatormodul (406) zum Zusammenführen kopierter Daten aus dem zweiten Datenstrom mit dem ersten Datenstrom; und
mindestens einen ersten Kommunikations-Port zum Übertragen von Informationen und/oder Daten zu und Empfangen von Informationen und/oder Daten von einem Kommunikationsnetz (308);
b) ein zweites Datenbehandlungssystem (310, 312) an einem von dem ersten Ort entfernten zweiten Ort, umfassend:
ein zweites Datenstromerzeugungsmodul (310), umfassend einen zweiten Kompiler zum Zusammenführen empfangener Daten von der Vielzahl von Datenlieferanten zu einem zweiten Datenstrom (600); und ein zweites Verarbeitungs- und Speichersystem (312), umfassend:
einen zweiten Datenspeicher (402) zum Speichern des zweiten Datenstroms;
ein zweites Duplikatormodul (404) zum Duplizieren von Daten aus dem zweiten Datenstrom;
ein zweites Kombinatormodul (406) zum Zusammenführen kopierter Daten aus dem ersten Datenstrom mit dem zweiten Datenstrom; und
mindestens einen zweiten Kommunikations-Port zum Übertragen von Informationen und/oder Daten zu und Empfangen von Informationen und/oder Daten von einem Kommunikationsnetz (308);
und
c) mindestens ein Komparatormodul (306, 314) zum Vergleichen von Informationen aus dem ersten und dem zweiten Datenstrom,
wobei das erste und das zweite Verarbeitungs- und Speichersystem dazu konfiguriert sind, über den mindestens einen ersten und den mindestens einen zweiten Kommunikation-Port Informationen zu und von dem mindestens einen Komparatormodul zu übertragen und Daten über das Kommunikationsnetz zwischen dem ersten und dem zweiten Verarbeitungs-und Speichersystem zu übertragen,
und wobei:
i) das erste und das zweite Datenstromerzeugungsmodul dazu konfiguriert sind, einen ersten und einen zweiten Datenstrom zum Verarbeiten und Speichern in dem ersten bzw. dem zweiten Verarbeitungs-und Speichersystem zu erzeugen;
ii) nach dem Empfang des ersten und des zweiten Datenstroms an dem ersten und dem zweiten Verarbeitungs- und Speichersystem, das erste Verarbeitungs- und Speichersystem dazu konfiguriert ist, erste Informationen aus einem neuesten Abschnitt (608) des ersten Datenstroms zu dem Komparatormodul zu übertragen (502), und das zweite Verarbeitungs- und Speichersystem dazu konfiguriert ist, zweite Informationen aus einem entsprechenden neuesten Abschnitt des zweiten Datenstroms zu dem Komparatormodul zu übertragen;
iii) das Komparatormodul dazu konfiguriert ist: die ersten und die zweiten Informationen zu vergleichen (504); einen Wert für die Diskrepanz zwischen den ersten und den zweiten Informationen zu messen; den Diskrepanzwert anhand eines Grenzwerts zu prüfen (506); und, wenn der Diskrepanzwert den Grenzwert überschreitet, Folgendes zu erzeugen:
einen Indikator (508), darüber, welcher von dem neuesten Abschnitt des ersten Datenstroms und dem entsprechenden neuesten Abschnitt des zweiten Datenstroms Daten höherer Qualität enthält, aus den ersten und den zweiten Informationen; und
eine Duplizierungsanweisung (422) für das Duplikatormodul des jeweiligen Verarbeitungs- und Speichersystems, dessen Datenstrom von dem Indikator als die Daten höherer Qualität enthaltend aufgezeigt wurde;
iv) das Duplikatormodul für den aufgezeigten Datenstrom dazu konfiguriert ist, sofern angewiesen, die Daten aus dem neuesten Abschnitt des aufgezeigten Datenstroms zu duplizieren (422);
v) das Verarbeitungs- und Speichersystem für den aufgezeigten Datenstrom dazu konfiguriert ist, die duplizierten Daten über den Kommunikations-Port zu dem Kombinatormodul des Verarbeitungs- und Speichersystems für den anderen Strom zu übertragen; und
vi) das Kombinatormodul für den anderen Strom dazu konfiguriert ist, den entsprechenden neuesten Abschnitt des anderen Stroms durch die duplizierten Daten aus dem neuesten Abschnitt (710) des aufgezeigten Stroms zu ersetzen (424, 707).

2. System nach Anspruch 1, wobei das Komparatormodul dazu konfiguriert ist, nach dem Vergleichs-, dem Prüf-, dem Messschritt und einem etwaigen Erzeugungsschritt, eine das Ende des aktuellen Abschnitts der Ströme, die verglichen werden, aufgezeigte Zeitpunktsmarkierung (606) in den ersten und den zweiten Datenstrom einzufügen,
und wobei das erste und das zweite Verarbeitungs- und Speichersystem dazu konfiguriert sind, den neuesten Abschnitt des jeweiligen Datenstroms zwischen einer neuesten Zeitpunktsmarkierung in dem jeweiligen Datenstrom und einem aktuellen Zeitpunkt zu definieren.

3. System nach Anspruch 1 oder Anspruch 2, wobei die ersten Informationen aus dem neuesten Abschnitt des ersten Datenstroms und die zweiten Informationen aus dem entsprechenden neuesten Abschnitt des zweiten Datenstroms, die zu dem Komparatormodul übertragen werden, eine Teilmenge der in diesen Abschnitten der jeweiligen Datenströme enthaltenen Daten umfassen.

4. System nach einem der vorangehenden Ansprüche, wobei:
der erste und der zweite Datenstrom jeweils in eine Vielzahl von Datenkanälen (602) unterteilt sind,
wobei die Unterteilung in dem ersten Datenstrom der Unterteilung in dem zweiten Datenstrom entspricht,
und wobei es sich bei dem neuesten Abschnitt des ersten Datenstroms um eine neuesten Abschnitt eines ersten Datenkanals der Vielzahl von Kanälen des ersten Datenstroms handelt und es sich bei dem entsprechenden neuesten Abschnitt des zweiten Datenstroms um einen entsprechenden neuesten Abschnitt eines entsprechenden ersten Datenkanals der entsprechenden Vielzahl von Datenkanälen des zweiten Datenstroms handelt.

5. System nach Anspruch 4, wobei nach Schritten (ii) bis (vi), es sich bei dem nächstneuesten Abschnitt des ersten Datenstroms für den Vergleich um den neuesten Abschnitt eines zweiten Datenkanals der Vielzahl von Datenkanälen des ersten Datenstroms handelt und es sich bei dem entsprechenden nächstneuesten Abschnitt des zweiten Datenstroms für den Vergleich um den entsprechenden neuesten Abschnitt eines entsprechenden zweiten Datenkanals der entsprechenden Vielzahl von Kanälen des zweiten Datenstroms handelt.

6. System nach einem der vorangehenden Ansprüche, wobei das Komparatormodul dazu konfiguriert ist, die ersten und die zweiten Informationen zu vergleichen, den Wert für die Diskrepanz zu messen und den Wert unter Verwendung einer Folgehierarchie von Diskrepanzfiltern anhand des Grenzwerts zu prüfen, wobei die Folgehierarchie von Diskrepanzfiltern von einem groben Diskrepanzvergleich zu einem feinen Diskrepanzvergleich voranschreitet.

7. System nach einem der vorangehenden Ansprüche, wobei das Komparatormodul dazu konfiguriert ist, zum Erzeugen des Indikators (508) darüber, welcher von dem neuesten Abschnitt des ersten Datenstroms und dem entsprechenden neuesten Abschnitt des zweiten Datenstroms die Daten mit höherer Qualität enthält:
die ersten und die zweiten Informationen unter Verwendung jedes einer Vielzahl von Qualitätsvergleichsfaktoren zu vergleichen; und
die Resultate der Vielzahl von Vergleichen zum Erzeugen des Indikators zu verwenden.

8. System nach Anspruch 7, wobei die Vielzahl von Qualitätsvergleichsfaktoren eine Hierarchie von Vergleichsfaktoren umfasst.

9. System nach einem der vorangehenden Ansprüche, wobei das Komparatormodul wirksam ist, um die ersten und die zweiten Informationen bei zwei oder mehr Auflösungen der ersten und der zweiten Informationen zu vergleichen, um die Diskrepanz zu messen und/oder den Qualitätsindikator zu erzeugen.

10. System nach Anspruch 9, wobei es sich bei den zwei oder mehr Auflösungen der ersten und der zweiten Informationen um unterschiedliche zeitliche Auflösungen der ersten und der zweiten Informationen handelt.

11. System nach Anspruch 10, wobei das Komparatormodul wirksam ist, um:
eine erste Zeitperiode der ersten Informationen aus dem neuesten Abschnitt des ersten Datenstroms und eine entsprechende erste Zeitperiode der zweiten Informationen aus dem entsprechenden neuesten Abschnitt des zweiten Datenstroms zu vergleichen; und
nach dem Vergleich der ersten Zeitperioden eine erste Teilperiode der ersten Zeitperiode der ersten Informationen mit einer entsprechenden ersten Teilperiode der entsprechenden ersten Zeitperiode der zweiten Informationen zu vergleichen.

12. Verfahren zum Synchronisieren eines unabhängigen ersten (302, 304) und eines unabhängigen zweiten (310, 312) Datenbehandlungssystems, wobei das erste und das zweite Datenbehandlungssystem jeweils Daten von derselben Vielzahl von Datenlieferanten (301) empfangen, wobei das erste und das zweite Datenbehandlungssystem einen ersten (302) und einen zweiten (310) aus den empfangenen Daten von der Vielzahl von Datenlieferanten erzeugten Datenstrom (600) verarbeiten, wobei das erste und das zweite Datenbehandlungssystem an verschiedenen Orten angeordnet sind, und wobei der erste und der zweite Datenstrom nicht ganz genau identisch sind, aber ausreichend identisch sind, um den Zweck der Redundanz des Bereitstellens der zwei getrennten Datenströme an den zwei Orten bereitzustellen, wobei das Verfahren Folgendes umfasst:
a) an einem ersten Datenbehandlungssystem (302, 304) an einem ersten Ort:
Zusammenführen empfangener Daten von der Vielzahl von Datenlieferanten zu einem ersten Datenstrom (600) durch ein einen ersten Kompiler umfassendes erstes Datenstromerzeugungsmodul; und
an einem ersten Verarbeitungs- und Speichersystem (304):
Speichern des ersten Datenstroms an einem ersten Datenspeicher (402);
Duplizieren von Daten von dem ersten Datenstrom an einem ersten Duplikatormodul (404);
Zusammenführen kopierter Daten aus dem zweiten Datenstrom mit dem ersten Datenstrom an einem ersten Kombinatormodul (406); und
Übertragen von Informationen und/oder Daten zu und Empfangen von Informationen und/oder Daten von einem Kommunikationsnetz (308) durch mindestens einen ersten Kommunikations-Port;
b) an einem zweiten Datenbehandlungssystem (310, 312) an einem von dem ersten Ort entfernten zweiten Ort:
Zusammenführen empfangener Daten von der Vielzahl von Datenlieferanten zu einem zweiten Datenstrom (600) durch ein einen zweiten Kompiler umfassendes zweites Datenstromerzeugungsmodul; und
an einem zweiten Verarbeitungs- und Speichersystem (312):
Speichern des zweiten Datenstroms an einem zweiten Datenspeicher (402);
Duplizieren von Daten aus dem zweiten Datenstrom an einem zweiten Duplikatormodul (404);
Zusammenführen kopierter Daten aus dem ersten Datenstrom mit dem zweiten Datenstrom an einem zweiten Kombinatormodul (406); und
Übertragen von Informationen und/oder Daten zu und Empfangen von Informationen und/oder Daten von einem Kommunikationsnetz (308) durch mindestens einen zweiten Kommunikations-Port;
und
c) Vergleichen von Informationen aus dem ersten und dem zweiten Datenstrom durch mindestens ein Komparatormodul (306, 314),
wobei das Verfahren weiter das Übertragen von Informationen zu und von dem mindestens einen Komparatormodul über den mindestens einen ersten und den mindestens einen zweiten Kommunikations-Port und das Übertragen von Daten über das Kommunikationsnetz zwischen dem ersten und dem zweiten Verarbeitungs- und Speichersystem durch das erste und das zweite Verarbeitungs- und Speichersystem umfasst,
wobei das Verfahren noch weiter Folgendes umfasst:
i) Erzeugen eines ersten und eines zweiten Datenstroms zum Verarbeiten und Speichern in dem ersten bzw. dem zweiten Verarbeitungs- und Speichersystem durch das erste bzw. das zweite Datenstromerzeugungsmodul;
ii) nach dem Empfang des ersten und des zweiten Datenstroms an dem ersten und dem zweiten Verarbeitungs- und Speichersystem, Übertragen (502) erster Informationen aus einem neuesten Abschnitt (608) des ersten Datenstroms zu dem Komparatormodul durch das erste Verarbeitungs- und Speichersystem, und Übertragen zweiter Informationen aus einem entsprechenden neuesten Abschnitt des zweiten Datenstroms zu dem Komparatormodul durch das zweite Verarbeitungs- und Speichersystem;
iii) durch das Komparatormodul: Vergleichen (504) der ersten und der zweiten Informationen; Messen eines Werts für die Diskrepanz zwischen den ersten und den zweiten Informationen; Prüfen (506) des Diskrepanzwerts anhand eines Grenzwerts; und, wenn der Diskrepanzwert den Grenzwert überschreitet, Erzeugen:
eines Indikators (508), darüber, welcher von dem neuesten Abschnitt des ersten Datenstroms und dem entsprechenden neuesten Abschnitt des zweiten Datenstroms Daten höherer Qualität enthält, aus den ersten und den zweiten Informationen; und
einer Duplizierungsanweisung (422) für das Duplikatormodul des jeweiligen Verarbeitungs- und Speichersystems, dessen Datenstrom von dem Indikator als die Daten höherer Qualität enthaltend aufgezeigt wurde;
iv) sofern angewiesen, Duplizieren (422) der Daten aus dem neusten Abschnitt des aufgezeigten Datenstroms durch das Duplikatormodul für den aufgezeigten Datenstrom;
v) Übertragen der duplizierten Daten über den Kommunikations-Port zu dem Kombinatormodul des Verarbeitungs- und Speichersystems für den anderen Strom durch das Verarbeitungs- und Speichersystem für den aufgezeigten Datenstrom; und
vi) Ersetzen (424, 707) des entsprechenden neuesten Abschnitts des anderen Stroms durch die duplizierten Daten aus dem neuesten Abschnitt (710) des aufgezeigten Stroms durch das Kombinatormodul für den anderen Strom.

## Revendications

1. Un système (300) de synchronisation d'un premier (302, 304) et d'un deuxième (310, 312) systèmes de gestion de données indépendants, chacun des premier et deuxième systèmes de gestion de données recevant des données à partir de la même pluralité de fournisseurs de données (301), les premier et deuxième systèmes de gestion de données traitant des premier (302) et deuxième (310) flux de données (600) générés à partir des données reçues de la pluralité de fournisseurs de données, où les premier et deuxième systèmes de gestion de données sont disposés dans des emplacements différents, et où les premier et deuxième flux de données ne sont pas tout à fait précisément identiques mais sont suffisamment identiques pour soutenir l'objectif de la redondance de fourniture des deux flux de données distincts dans les deux emplacements, le système comprenant :
a) un premier système de gestion de données (302, 304) à un premier emplacement comprenant :
un premier module de génération de flux de données (302), comprenant un premier compilateur destiné à la combinaison de données reçues à partir de la pluralité de fournisseurs de données en un premier flux de données (600), et
un premier système de traitement et de conservation en mémoire (304), comprenant :
un premier espace mémoire de données (402) destiné à la conservation en mémoire du premier flux de données,
un premier module duplicateur (404) destiné à la duplication de données provenant du premier flux de données,
un premier module combineur (406) destiné à la combinaison de données copiées à partir du deuxième flux de données avec le premier flux de données, et
au moins un premier port de communication destiné à la transmission d'informations et/ou de données vers et à la réception d'informations et/ou de données à partir d'un réseau de communication (308),
b) un deuxième système de gestion de données (310, 312) à un deuxième emplacement distant du premier emplacement, comprenant :
un deuxième module de génération de flux de données (310), comprenant un deuxième compilateur destiné à la combinaison de données reçues de la pluralité de fournisseurs de données en un deuxième flux de données (600), et
un deuxième système de traitement et de conservation en mémoire (312), comprenant :
un deuxième espace mémoire de données (402) destiné à la conservation en mémoire du deuxième flux de données,
un deuxième module duplicateur (404) destiné à la duplication de données provenant du deuxième flux de données,
un deuxième module combineur (406) destiné à la combinaison de données copiées à partir du premier flux de données avec le deuxième flux de données, et
au moins un deuxième port de communication destiné à la transmission d'informations et/ou de données vers et à la réception d'informations et/ou de données à partir d'un réseau de communication (308),
et
c) au moins un module comparateur (306, 314) destiné à la comparaison d'informations provenant des premier et deuxième flux de données,
où les premier et deuxième systèmes de traitement et de conservation en mémoire sont configurés de façon à, par l'intermédiaire des au moins premier et deuxième ports de communication, transmettre des informations à et à partir du au moins un module comparateur, transmettre des données entre les premier et deuxième systèmes de traitement et de conservation en mémoire, par l'intermédiaire du réseau de communication,
et où :
i) les premier et deuxième modules de génération de flux de données sont configurés de façon à générer des premier et deuxième flux de données destinés à un traitement et une conservation en mémoire dans les premier et deuxième systèmes de traitement et de conservation en mémoire respectifs,
ii) suite à la réception des premier et deuxième flux de données au niveau des premier et deuxième systèmes de traitement et de conservation en mémoire, le premier système de traitement et de conservation en mémoire est configuré de façon à transmettre (502) des premières informations à partir d'une section la plus récente (608) du premier flux de données au module comparateur, et le deuxième système de traitement et de conservation en mémoire est configuré de façon à transmettre des deuxièmes informations à partir d'une section la plus récente correspondante du deuxième flux de données au module comparateur,
iii) le module comparateur est configuré de façon à : comparer (504) les premières et deuxièmes informations, mesurer une valeur de divergence entre les premières et deuxièmes informations, tester (506) la valeur de divergence par rapport à un seuil, et, si la valeur de divergence dépasse le seuil, générer :
à partir des premières et deuxièmes informations un indicateur (508) indiquant laquelle de ladite section la plus récente du premier flux de données et de ladite section la plus récente correspondante du deuxième flux de données contient une qualité de données plus élevée, et
une instruction de duplication (422) destinée au module duplicateur du système de traitement et de conservation en mémoire respectif dont le flux de données a été indiqué par l'indicateur contenir la qualité de données plus élevée,
iv) le module duplicateur destiné au flux de données indiqué est configuré de façon à, si instruit, dupliquer (422) les données provenant de ladite section la plus récente du flux de données indiqué,
v) le système de traitement et de conservation en mémoire destiné au flux de données indiqué est configuré de façon à transmettre, par l'intermédiaire du port de communication, les données dupliquées au module combineur du système de traitement et de conservation en mémoire destiné à l'autre flux, et
vi) le module combineur destiné à l'autre flux est configuré de façon à remplacer (424, 707) ladite section la plus récente correspondante de l'autre flux par les données dupliquées provenant de ladite section la plus récente (710) du flux indiqué.

2. Le système selon la Revendication 1, où le module comparateur est configuré de façon à, suite aux opérations de comparaison, de test et de mesure et toute opération de génération, insérer dans chacun des premier et deuxième flux de données un marqueur de point temporel (606) indiquant la fin de la section courante des flux faisant l'objet de la comparaison,
et où les premier et deuxième systèmes de traitement et de conservation en mémoire sont configurés de façon à définir ladite section la plus récente des flux de données respectifs entre un marqueur de point temporel le plus récent dans les flux de données respectifs et un point temporel actuel.

3. Le système selon la Revendication 1 ou 2, où les premières informations provenant de la section la plus récente du premier flux de données et les deuxièmes informations provenant de la section la plus récente correspondante du deuxième flux de données, transmises au module comparateur, comprennent un sous-ensemble des données contenues dans ces sections des flux de données respectifs.

4. Le système selon l'une quelconque des Revendications précédentes, où :
les premier et deuxième flux de données sont chacun subdivisés en une pluralité de canaux de données (602),
où la subdivision dans le premier flux de données correspond à la subdivision dans le deuxième flux de données,
et où ladite section la plus récente du premier flux de données est une section la plus récente d'un premier canal de données de la pluralité de canaux du premier flux de données, et ladite section la plus récente correspondante du deuxième flux de données est une section la plus récente correspondante d'un premier canal de données correspondant de la pluralité correspondante de canaux du deuxième flux de données.

5. Le système selon la Revendication 4, où, suite aux opérations (ii) à (vi), la section la plus récente suivante du premier flux de données à des fins de comparaison est la section la plus récente d'un deuxième canal de données de la pluralité de canaux de données du premier flux de données, et la section la plus récente suivante correspondante du deuxième flux de données à des fins de comparaison est la section la plus récente correspondante d'un deuxième canal de données correspondant de la pluralité correspondante de canaux du deuxième flux de données.

6. Le système selon l'une quelconque des Revendications précédentes, où le module comparateur est configuré de façon à comparer les premières et deuxièmes informations, mesurer la valeur de divergence et tester la valeur par rapport au seuil, au moyen d'une hiérarchie séquencée de filtres de divergence, la hiérarchie séquencée de filtres de divergence allant d'une comparaison de divergence grossière à une comparaison de divergence fine.

7. Le système selon l'une quelconque des Revendications précédentes, où le module comparateur est configuré de façon à, pour la génération de l'indicateur (508) indiquant laquelle de ladite section la plus récente du premier flux de données et de ladite section la plus récente correspondante du deuxième flux de données contient la qualité de données plus élevée :
comparer lesdites premières et deuxièmes informations au moyen de chaque facteur d'une pluralité de facteurs de comparaison qualitative, et
utiliser les résultats de la pluralité de comparaisons de façon à générer l'indicateur.

8. Le système selon la Revendication 7, où la pluralité de facteurs de comparaison qualitative comprend une hiérarchie de facteurs de comparaison.

9. Le système selon l'une quelconque des Revendications précédentes, où le module comparateur est conçu de façon à comparer les premières et deuxièmes informations à deux ou plus résolutions des premières et deuxièmes informations, afin de mesurer la divergence et/ou de générer l'indicateur de qualité.

10. Le système selon la Revendication 9, où les deux ou plus résolutions des premières et deuxièmes informations sont des résolutions différentes dans le temps des premières et deuxièmes informations.

11. Le système selon la Revendication 10, où le module comparateur est conçu de façon à :
comparer une première période temporelle des premières informations, à partir de ladite section la plus récente du premier flux de données, et une première période temporelle correspondante des deuxièmes informations, à partir de ladite section la plus récente correspondante du deuxième flux de données, et
suite à la comparaison de la première période temporelle, comparer une première sous-période de la première période temporelle des premières informations à une première sous-période correspondante de la première période temporelle correspondante des deuxièmes informations.

12. Un procédé de synchronisation d'un premier (302, 304) et d'un deuxième (310, 312) systèmes de gestion de données indépendants, chacun des premier et deuxième systèmes de gestion de données recevant des données à partir de la même pluralité de fournisseurs de données (301), les premier et deuxième systèmes de gestion de données traitant des premier (302) et deuxième (310) flux de données (600) générés à partir des données reçues de la pluralité de fournisseurs de données, où les premier et deuxième systèmes de gestion de données sont disposés dans des emplacements différents, et où les premier et deuxième flux de données ne sont pas tout à fait précisément identiques mais sont suffisamment identiques pour soutenir l'objectif de la redondance de fourniture des deux flux de données distincts dans les deux emplacements, le procédé comprenant :
a) au niveau d'un premier système de gestion de données (302, 304) à un premier emplacement :
la combinaison de données reçues de la pluralité de fournisseurs de données en un premier flux de données (600), par un premier module de génération de flux de données (302) comprenant un premier compilateur, et
au niveau d'un premier système de traitement et de conservation en mémoire (304) :
la conservation en mémoire du premier flux de données au niveau d'un premier espace mémoire de données (402),
la duplication de données provenant du premier flux de données au niveau d'un premier module duplicateur (404),
la combinaison de données copiées à partir du deuxième flux de données avec le premier flux de données au niveau d'un premier module combineur (406), et
la transmission d'informations et/ou de données à et la réception d'informations et/ou de données à partir d'un réseau de communication (308) par au moins un premier port de communication,
b) au niveau d'un deuxième système de gestion de données (310, 312) à un deuxième emplacement distant du premier emplacement :
la combinaison de données reçues de la pluralité de fournisseurs de données en un deuxième flux de données (600) par un deuxième module de génération de flux de données (310), comprenant un deuxième compilateur, et
au niveau d'un deuxième système de traitement et de conservation en mémoire (312) :
la conservation en mémoire du deuxième flux de données au niveau d'un deuxième espace mémoire de données (402),
la duplication de données à partir du deuxième flux de données au niveau d'un deuxième module duplicateur (404),
la combinaison de données copiées à partir du premier flux de données avec le deuxième flux de données au niveau d'un deuxième module combineur (406), et
la transmission d'informations et/ou de données à et la réception d'informations et/ou de données à partir d'un réseau de communication (308) par au moins un deuxième port de
communication,
et
c) par au moins un module comparateur (306, 314), la comparaison d'informations provenant des premier et deuxième flux de données,
le procédé comprenant en outre, par les premier et deuxième systèmes de traitement et de conservation en mémoire, par l'intermédiaire des au moins premier et deuxième ports de communication, la transmission d'informations vers et à partir du au moins un module comparateur, et la transmission de données entre les premier et deuxième systèmes de traitement et de conservation en mémoire, par l'intermédiaire du réseau de communication,
le procédé comprenant en outre encore :
i) par les premier et deuxième modules de génération de flux de données, la génération d'un premier et d'un deuxième flux de données destinés à un traitement et une conservation en mémoire dans les premier et deuxième systèmes de traitement et de conservation en mémoire respectifs,
ii) suite à la réception des premier et deuxième flux de données au niveau des premier et deuxième systèmes de traitement et de conservation en mémoire, par le premier système de traitement et de conservation en mémoire, la transmission (502) de premières informations à partir d'une section la plus récente (608) du premier flux de données au module comparateur, et par le deuxième système de traitement et de conservation en mémoire, la transmission de deuxièmes informations à partir d'une section la plus récente correspondante du deuxième flux de données au module comparateur,
iii) par le module comparateur : la comparaison (504) des premières et deuxièmes informations, la mesure d'une valeur de divergence entre les premières et deuxièmes informations, le test (506) de la valeur de divergence par rapport à un seuil et, si la valeur de divergence dépasse le seuil, la génération :
à partir des premières et deuxièmes informations, d'un indicateur (508) indiquant laquelle de ladite section la plus récente du premier flux de données et de ladite deuxième section la plus récente de flux de données correspondante contient une qualité de données plus élevée, et
d'une instruction de duplication (422) destinée au module duplicateur du système de traitement et de conservation en mémoire respectif dont le flux de données a été indiqué par l'indicateur contenir la qualité de données plus élevée,
iv) par le module duplicateur destiné au flux de données indiqué, si instruit, la duplication (422) des données provenant de ladite section la plus récente du flux de données indiqué,
v) par le système de traitement et de conservation en mémoire destiné au flux de données indiqué, la transmission, par l'intermédiaire du port de communication, des données dupliquées au module combineur du système de traitement et de conservation en mémoire destiné à l'autre flux, et
vi) par le module combineur destiné à l'autre flux, le remplacement (424, 707) de ladite section la plus récente correspondante de l'autre flux par les données dupliquées à partir de ladite section la plus récente (710) du flux indiqué.
